# EUROPÄISCHE PATENTSCHRIFT

(11) **EP 2 263 280 B1**
(45) Veröffentlichungstag und Bekanntmachung des Hinweises auf die Patenterteilung: **18.05.2016**
(21) Anmeldenummer: 09731736.6
(22) Anmeldetag: 02.04.2009
(51) Int. Cl.: H01M 8/04, F01P 3/00, F01P 11/02

(54) **FLÜSSIGKEITSKÜHLUNGSVORRICHTUNG FÜR EINE BRENNSTOFFZELLENEINRICHTUNG UND BRENNSTOFFZELLENSYSTEM**
FLUID COOLING APPARATUS FOR A FUEL CELL DEVICE AND FUEL CELL SYSTEM
DISPOSITIF DE REFROIDISSEMENT À LIQUIDE POUR UNE BATTERIE DE PILES À COMBUSTIBLE ET SYSTÈME DE PILES À COMBUSTIBLE

(30) Priorität: 18.04.2008 DE 102008020903
(43) Veröffentlichungstag der Anmeldung: 22.12.2010
(73) Patentinhaber: Deutsches Zentrum für Luft- und Raumfahrt e.V., 51147 Köln (DE)
(72) Erfinder: BRINNER, Andreas, 71277 Rutesheim (DE); MAAG, Tilo, 76327 Pfinztal (DE)
(74) Vertreter: Hoeger, Stellrecht & Partner Patentanwälte mbB
(86) Internationale Anmeldenummer: PCT/EP2009/053959
(87) Internationale Veröffentlichungsnummer: WO 2009/127531

(56) Entgegenhaltungen:
- DE-A1-102006 015 572
- JP-A- 2007 042 374
- US-A- 6 053 132
- US-A1- 2002 037 447
- US-A1- 2005 106 433
- US-A1- 2005 130 002

## Beschreibung

Die Erfindung betrifft eine Flüssigkeitskühlungsvorrichtung für eine Brennstoffzelleneinrichtung, welche als selbständige Einheit ausgebildet ist und durch welche der Brennstoffzelleneinrichtung Kühlflüssigkeit bereitstellbar ist und von der Brennstoffzelleneinrichtung erwärmte Flüssigkeit abnehmbar ist, umfassend einen Eingangsanschluss für Flüssigkeit, einen Ausgangsanschluss für Flüssigkeit, einen Radiator und ein temperaturgeregeltes Zwei-Wege-Ventil, wobei ein erster Weg durch den Radiator geführt ist und ein zweiter Weg an dem Radiator vorbeigeführt ist und über das Zwei-Wege-Ventil eine Massenstromaufteilung der Flüssigkeit auf den ersten Weg und den zweiten Weg einstellbar ist, und wobei dem Zwei-Wege-Ventil mindestens ein Temperatursensor zugeordnet ist, wobei das Zwei-Wege-Ventil auf Grundlage von Temperaturmesswerten des mindestens einen Temperatursensors geregelt ist.

Die Erfindung betrifft ferner ein Brennstoffzellensystem.

Aus der WO 2006/032359 ist ein Brennstoffzellensystem bekannt, welches eine Brennstoffzelleneinrichtung mit einem oder mehreren Brennstoffzellen-blöcken umfasst, in denen chemische Energie in elektrische Energie umwandelbar ist, eine Oxidator-Versorgungseinrichtung für die Brennstoffzelleneinrichtung, eine Brennstoff-Versorgungseinrichtung für die Brennstoffzelleneinrichtung und eine Steuerungseinrichtung umfasst. Die entsprechenden Einrichtungen können als Module ausgebildet sein. Es ist beschrieben, dass auch eine Kühlungseinrichtung als Modul ausgebildet sein kann.

Aus der DE 101 27 599 A1 ist ein Brennstoffzellensystem bekannt, welches eine Hilfsenergiequelle umfasst, welches die Hilfsenergie zur Inbetriebnahme des Brennstoffzellensystems bereitstellt.

Aus der DE 101 27 600 A1 ist ein Brennstoffzellensystem bekannt, welches eine Einstellvorrichtung aufweist, mittels welcher Zuführungsparameter von Brennstoff und Oxidator zu einem Brennstoffzellenblock fest vorgebbar sind.

Aus der DE 11 2005 003 074 T5 ist ein Brennstoffzellensystem bekannt, welches ein Kühlmittel-Umwälzsystem zum Umwälzen eines Kühlmittels von einer Brennstoffzelle zu der Brennstoffzelle aufweist, wobei das Kühlmittel-Umwälzsystem ein Stromsteuermittel zum Hindern des Kühlmittels, das einen vorgegebenen Temperaturunterschied zur Brennstoffzelle aufweist, an einer Strömung in die Brennstoffzelle aufweist.

Aus der DE 11 2005 000 265 T5 ist eine Vorrichtung zum Kühlen einer Brennstoffzelle bekannt, welche eine Temperatur der Brennstoffzelle auf eine Soll-wert-Einstelltemperatur durch Zuführen eines Kühlmittels einstellt, bei der ein auf eine Temperatur des Kühlmittels bezogener Parameter steuerbar ist, um eine elektrische Leitfähigkeit bei der Sollwert-Einstelltemperatur innerhalb eines elektrischen Sollwert-Leitfähigkeitsbereichs zu halten, und zwar basierend auf der Korrelation zwischen dem Parameter, der auf die Kühlmitteltemperatur bezogen ist, und der elektrischen Leitfähigkeit des Kühlmittels.

Aus der DE 10 2005 045 557 B4 ist ein Verfahren zum Bestimmen einer Temperatur eines Kühlmittels in einem Kühlmittelumwälzsystem bekannt, bei dem ein Kühlmitteldurchflussventil in dem Kühlmittelumwälzsystem vorgesehen wird, wobei das Kühlmitteldurchflussventil ein Ventilgehäuse und ein Ausdehnungselement umfasst, das in dem Ventilgehäuse vorgesehen ist, um einen Durchfluss des Kühlmittels durch das Ventilgehäuse zu steuern, ein Ohmscher Widerstand des Ausdehnungselements gemessen wird, und der Ohmsche Widerstand des Ausdehnungselements mit der Temperatur des Kühlmittels korreliert wird.

Aus der DE 11 2004 001 059 T5 ist ein Kühlsystem für eine Brennstoffzelle bekannt, welche eine Kühlvorrichtung aufweist, die die Temperatur der Brennstoffzelle reguliert, indem der Brennstoffzelle eine Kühlflüssigkeit mittels einer Pumpe zugeführt wird, eine Verunreinigungsentfernungsvorrichtung aufweist, die in einer Kühlflüssigkeitsleitung für die Kühlflüssigkeit bereitgestellt ist, die Verunreinigung in der Kühlflüssigkeit entfernt, und eine Strömungserzeugungseinrichtung zum Bewirken, dass die Kühlflüssigkeit innerhalb der Kühlflüssigkeitsleitung durch die Verunreinigungsentfernungsvorrichtung strömt, wenn die Brennstoffzelle nicht arbeitet, aufweist.

Aus der US 2007/0166577 A1 ist ein Verfahren zur Betätigung eines Brennstoffzellensystems bekannt, bei dem in einem ersten Schritt eine Brennstoffzelle in einem Niedertemperaturbetätigungsmodus betätigt wird und dabei aufgewärmt wird, falls eine Niedertemperaturbetätigungsbedingung erfüllt ist bei einem Starten der Brennstoffzelle, und bei dem bei einem zweiten Schritt eine Membranelektrodeneinheit der Brennstoffzelle getrocknet wird, wenn die Leistungserzeugungskapazität der Brennstoffzelle niedriger ist als eine vorgegebene Kapazität.

Aus der US 6,053,132 ist ein Motorkühlsystem bekannt.

Aus der US 2005/0106433 A1 ist ein Kühlgerät für eine Brennstoffzelle bekannt, welches eine Kühlfluidzirkulation zwischen einem Brennstoffzellenstack und einem Radiator aufweist. Es ist ein Ionenentfernungsfilter vorgesehen.

Aus der US 2005/0130002 A1 ist ein Brennstoffzellensystem bekannt.

Aus der DE 10 2006 015 572 A1 ist eine Verdichtungsvorrichtung für einen Brennstoffzellenstapel mit einer Kompressorvorrichtung zur Kompression des Oxidanten und mit einer Oxidantenkühlungsvorrichtung zur Kühlung des komprimierten Oxidanten bekannt. Kompressorvorrichtung und Oxidantenkühlungsvorrichtung sind an einem gemeinsamen Kühlmittelkreis angeschlossen.

Der Erfindung liegt die Aufgabe zugrunde, eine Flüssigkeitskühlungsvorrichtung für eine Brennstoffzelleneinrichtung der eingangs genannten Art bereitzustellen, welche universell einsetzbar ist.

Diese Aufgabe wird bei der eingangs genannten Flüssigkeitskühlungsvorrichtung erfindungsgemäß dadurch gelöst, dass dass eine Mehrzahl von Lüftern, welche individuell drehzahlgeregelt sind und welche auf den Radiator ausgerichtet sind, vorgesehen ist, dass eine Schalteinrichtung, durch welche ein oder mehrere Lüfter zuschaltbar oder abschaltbar sind, vorgesehen ist, dass ein Lüfter bei der Zuschaltung mit einer endlichen Mindestdrehzahl betrieben ist, dass das Zwei-Wege-Ventil einen Fühler aufweist, an welchem der mindestens eine Temperatursensor angeordnet ist, und dass der mindestens eine Temperatursensor einem Flüssigkeitsvorrat zur Pufferspeicherung von gekühlter Flüssigkeit zugeordnet ist, wobei der mindestens eine Temperatursensor so angeordnet ist, dass eine Eingangstemperatur in den Flüssigkeitsvorrat messbar ist oder der mindestens eine Temperatursensor so angeordnet ist, dass eine Temperatur im Flüssigkeitsvorrat messbar ist, oder dass der mindestens eine Temperatursensor so angeordnet ist, dass eine Ausgangstemperatur nachfolgend einer Pumpe messbar ist.

Durch die erfindungsgemäße Flüssigkeitskühlungsvorrichtung lässt sich bei einfachem und günstigem Systemaufbau Kühlungsflüssigkeit für eine Brennstoffzelleneinrichtung bereitstellen und in einem Kreislauf durch die Brennstoffzelleneinrichtung durchführen. Durch die Ausbildung als selbständige Einheit ist die erfindungsgemäße Flüssigkeitskühlungsvorrichtung universell einsetzbar. Sie lässt sich an eine Brennstoffzelleneinrichtung ankoppeln.

Die Kühlung lässt sich über das (interne) Zwei-Wege-Ventil und die Lüfter regeln. Beispielsweise durch Vorwahl der Regeltemperatur des Zwei-Wege-Ventils lässt sich eine einfache Anpassung an unterschiedliche Betriebstemperaturniveaus der Brennstoffzelleneinrichtung durchführen.

Die Temperaturregelung des Zwei-Wege-Ventils lässt sich alleine aufgrund von internen Messungen an der Flüssigkeitskühlungsvorrichtung durchführen. Dadurch lässt sich diese autonom ausbilden. Die Aufteilung des Massenstroms an zu kühlender Flüssigkeit auf den ersten Weg und den zweiten Weg sowie die Drehzahlregelung der Lüfter erlaubt es, dass die Flüssigkeitskühlungsvorrichtung selbsttätig auf Änderungen der thermischen Eingangsleistung, d. h. der Abwärmeleistung der Brennstoffzelleneinrichtung, und Umgebungstemperatur reagieren kann. Die Flüssigkeitskühlungsvorrichtung muss keine externen Steuerungs- oder Regelungssignale empfangen, um die Regelung durchführen zu können. Die Flüssigkeitskühlungsvorrichtung lässt sich durch Zuschalten einer (Umlauf-)Pumpe für die Flüssigkeitsförderung in der Flüssigkeitskühlungsvorrichtung schnell anfahren. Es lässt sich dabei eine Brennstoffzelleneinrichtung schnell auf eine optimierte Betriebstemperatur aufheizen, da der zweite Weg (Bypass-Weg) zur Verfügung steht.

Es lässt sich ein sanfter Temperaturübergang vom schnellen Aufheizen in eine Regelung der Temperatur der Flüssigkeit durch die Kombination des temperaturgeregelten Zwei-Wege-Ventils und der drehzahlgeregelten Lüfter erreichen.

Die erfindungsgemäße Flüssigkeitskühlungsvorrichtung lässt sich skaliert realisieren. Beispielsweise kann über die Anzahl der vorgesehenen Lüfter die thermische Kühlleistung eingestellt werden.

Die erfindungsgemäße Flüssigkeitskühlungsvorrichtung lässt sich vorteilhaft einsetzen für PEFC-Systeme. Beispielsweise lassen sich Kühlleistungen in der Größenordnung zwischen 800 W und 2000 W auf einfache Weise realisieren.

Ganz besonders vorteilhaft ist es, wenn das Zwei-Wege-Ventil als Drei-Zwei-Wege-Ventil ausgebildet ist, welches drei Anschlüsse (einen Eingangsanschluss, welcher mit dem Eingangsanschluss der Flüssigkeitskühlungsvorrichtung verbunden ist) und zwei Ausgangsanschlüsse aufweist, um den ersten Weg und den zweiten Weg zu definieren.

Dem Zwei-Wege-Ventil ist mindestens ein Temperatursensor zugeordnet, wobei das Zwei-Wege-Ventil auf Grundlage von Temperaturmesswerten des mindestens einen Temperatursensors geregelt ist. Dadurch lässt sich ein Flüssigkeitskühlungssystem realisieren, welches insbesondere keine Regelinformationen mit der Brennstoffzelleneinrichtung austauschen muss. Die direkt gemessenen Temperaturmesswerte an der Flüssigkeit sorgen für die entsprechende Einstellung der Aufteilung der Flüssigkeitsmassenströme auf den ersten Weg und den zweiten Weg.

Das Zwei-Wege-Ventil weist einen Fühler auf, an welchem der mindestens eine Temperatursensor angeordnet ist. Der Fühler misst die Temperatur von Flüssigkeit in der Flüssigkeitskühlungsvorrichtung an einer geeigneten Stelle.

Der mindestens eine Temperatursensor ist einem Flüssigkeitsvorrat zugeordnet. Er misst die Temperatur von Flüssigkeit, welche in den Flüssigkeitsvorrat strömt oder welche sich in dem Flüssigkeitsvorrat befindet. Der Flüssigkeitsvorrat ist ein Flüssigkeitspufferspeicher, in welchem gekühlte Flüssigkeit gespeichert wird. Es lässt sich dadurch auf einfache Weise eine Temperaturregelung des Zwei-Wege-Ventils erreichen.

Beispielsweise ist der mindestens eine Temperatursensor so angeordnet, dass eine Eingangstemperatur in einen Flüssigkeitsvorrat messbar ist oder dass eine Temperatur im Flüssigkeitsvorrat messbar ist. Dadurch lässt sich das Zwei-Wege-Ventil direkt über diese gemessene Temperatur regeln.

Bei einer Ausführungsform ist ein Temperatursensor so angeordnet, dass eine Ausgangstemperatur nachfolgend einer Pumpe messbar ist. Insbesondere ist der Temperatursensor dann so angeordnet, dass eine Temperatur an oder in der Nähe eines Ausgangsanschlusses gemessen wird.

Ganz besonders vorteilhaft ist es, wenn das Zwei-Wege-Ventil als Thermostatventil und/oder als Thermohydraulikventil ausgebildet ist. Dadurch lässt sich auf einfache Weise die Regelung des Zwei-Wege-Ventils bewirken. Das Zwei-Wege-Ventil muss dann nicht als elektronisch ansteuerbares Ventil ausgebildet sein. Bei einem Thermohydraulikventil lässt sich eine Ventilstellung zur Aufteilung des Flüssigkeitsmassenstroms direkt über Temperaturmesswerte steuern.

Günstig ist es, wenn eine Pumpe zum Fördern von Flüssigkeit ungeregelt auf einen Massenstrom-Arbeitspunkt betrieben ist. Es kann dabei vorteilhafterweise vorgesehen sein, dass dieser Arbeitspunkt selber einstellbar ist. Beim Betrieb der Flüssigkeitskühlungsvorrichtung ist dann gewährleistet, dass der Brennstoffzelleneinrichtung Flüssigkeit zum Kühlen mit einem konstanten Massenstrom bereitgestellt wird. Dadurch treten keine Veränderungen im Wärmeübergang in einen Brennstoffzellenblock (bei verschiedenen Temperaturen bzw. thermischen Leistungen) auf. Außerdem wird dadurch die Zuverlässigkeit der Pumpe erhöht, da bei einem Konstantlauf ohne Drehzahlschwankungen die Gefahr von Pumpenstörungen verringert ist.

Insbesondere ist ein interner Flüssigkeitsvorrat vorgesehen. Dadurch umfasst die Flüssigkeitskühlungsvorrichtung einen Pufferspeicher, welcher abgekühlte Flüssigkeit bereithält.

Günstigerweise ist eine Filtereinrichtung vorgesehen, welche dem Eingangsanschluss nachgeordnet ist. Insbesondere umfasst diese Filtereinrichtung einen Ionentauscher beispielsweise mit Festbettfilter. Dadurch wird die Betriebszuverlässigkeit erhöht. Insbesondere ist die Filtereinrichtung lösbar beispielsweise über eine Schnellsteckverbindung angeordnet, um einen einfachen Filteraustausch zu ermöglichen.

Ganz besonders vorteilhaft ist es, wenn der Lüftern ein eigener Temperatursensor zugeordnet ist. Insbesondere ist jedem einzelnen Lüfter ein eigener Temperatursensor zugeordnet. Dadurch lässt sich auf einfache Weise eine Drehzahlregelung für jeden Lüfter realisieren. Der einem Lüfter zugeordnete Temperatursensor misst insbesondere die Lufttemperatur an einem Luftstrom des Kühlers, wobei der Temperatursensor vorteilhafterweise so angeordnet ist, dass zwischen ihm und dem Lüfter der Radiator liegt.

Günstig ist es weiterhin, wenn jedem Lüfter ein eigener Drehzahlregler zugeordnet ist. Durch eine Drehzahlregelung der Lüfters lässt sich eine Leistungsanpassung bezüglich der Kühlleistung erreichen. Dadurch kann beispielsweise eine Aufheizphase berücksichtigt werden und es können auch auf einfache Weise Schwankungen in der Umgebungstemperatur berücksichtigt werden.

Erfindungsgemäß ist eine Mehrzahl von Lüftern vorgesehen, welche individuell und vorzugsweise unabhängig voneinander drehzahlgeregelt sind. Es ist dadurch möglich, eine in Abhängigkeit von der Temperatur des zu kühlenden Kühlmediums angepasste Kühlleistung zu erhalten, indem die Anzahl der aktiven Lüfter entsprechend gewählt wird.

Es ist dann vorteilhaft, wenn eine Schalteinrichtung vorgesehen ist, durch welche ein oder mehrere Lüfter zuschaltbar oder abschaltbar sind. Es können dann, wenn beispielsweise eine bestimmte Schwellentemperatur für die Flüssigkeit überschritten wird, ein oder mehrere Lüfter bzw. Lüfterbänke zugeschaltet werden, um eine stärkere Abkühlung zu erreichen. Bei einer Absenkung der Temperatur lassen sich dann die entsprechenden Lüfter wieder abschalten.

Ganz besonders vorteilhaft ist es, wenn ein Lüfter bei der Zuschaltung mit einer endlichen Mindestdrehzahl betrieben ist, d. h. wenn beim Zuschalten der Lüfter nicht von der Drehzahl 0 anfahren muss, sondern bereits mit der Mindestdrehzahl betrieben wird.

Günstigerweise ist ein Temperatursensor vorgesehen, welcher die Temperatur der Flüssigkeit im ersten Weg misst (vor Eintritt in den Radiator), wobei aufgrund der gemessenen Temperaturwerte ein Lüfter zuschaltbar oder abschaltbar ist. Es lässt sich dadurch eine autonome Flüssigkeitskühlungsvorrichtung bereitstellen, deren Regelung auf internen Messungen beruht.

Bei einem Ausführungsbeispiel ist ein günstiger Betriebsmodus vorgesehen, bei dem unterhalb einer ersten Schwellentemperatur für die zu kühlende Flüssigkeit die Flüssigkeit durch das Zwei-Wege-Ventil in den zweiten Weg geleitet wird. Es wird dadurch in einer Bypass-Leitung der Radiator umgangen. Dadurch lässt sich, da eine zu starke Abkühlung der Flüssigkeit verhindert wird, ein Brennstoffzellenblock schnell aufheizen.

Insbesondere ist in diesem Betriebsmodus mindestens ein Lüfter mit endlicher Mindestdrehzahl betrieben. Es lässt sich dadurch ein sanfter Temperaturübergang von dem schnellen Aufheizen in eine Regelung der Temperatur der Flüssigkeit erreichen. Der mindestens eine Lüfter muss nicht von der Drehzahl Null her angefahren werden.

Es ist dann ferner günstig, wenn eine Öffnung des Zwei-Wege-Ventils mit temperaturgeregelter Aufteilung des Massenstroms an Flüssigkeit auf den ersten Weg und den zweiten Weg bei Überschreiten der ersten Schwellentemperatur erfolgt. Dadurch lässt sich eine effektive Kühlung angepasst an die momentanen Verhältnisse erreichen.

Insbesondere erfolgt eine Drehzahlregelung des mindestens einen Lüfters bei Überschreiten der ersten Schwellentemperatur. Bei Erhöhung der Temperatur wird der mindestens eine Lüfter mit erhöhter Drehzahl betrieben, um eine effektive Kühlung zu erreichen.

Es ist ferner günstig, wenn mindestens ein weiterer Lüfter bei Überschreiten einer zweiten Schwellentemperatur, welche oberhalb der ersten Schwellentemperatur liegt, zugeschaltet wird. Dadurch lässt sich die Anzahl der wirksamen Lüfter auf einfache Weise erhöhen, um eine effektive Kühlung zu bewirken.

Insbesondere wird der mindestens eine Lüfter mit einer endlichen Mindestdrehzahl zugeschaltet, so dass ein "sanfter Temperaturübergang" erreicht wird, da der entsprechende mindestens eine Lüfter nicht von der Drehzahl Null her angefahren werden muss.

Günstig ist es, wenn eine Alarmeinrichtung zur Betriebsüberwachung vorgesehen ist. Dadurch lässt sich die Flüssigkeitskühlungsvorrichtung bezüglich nicht mehr korrigierbaren Parametern überwachen, um beispielsweise eine Notabschaltung zu bewirken.

Insbesondere umfasst die Alarmeinrichtung eine Mehrzahl von hintereinander geschalteten Grenzwertschaltern. Wenn dann an irgendeinem dieser Grenzwertschalter kritische Bedingungen erreicht sind, erfolgt eine Alarmausgabe.

Insbesondere umfasst die Alarmeinrichtung einen Temperaturwächter für eine Eingangstemperatur der Flüssigkeit und/oder einen Füllstandswächter an einem Flüssigkeitsvorrat und/oder einen Minimaldurchflusswächter für Flüssigkeit. Wenn der Temperaturwächter für die Eingangstemperatur anzeigt, dass die in die Flüssigkeitskühlungsvorrichtung einströmende Flüssigkeit zu heiß ist, ist eine Notabschaltung notwendig. Wenn der Füllstandswächter anzeigt, dass sich zu viel oder zu wenig Flüssigkeit im Flüssigkeitsvorrat befindet, dann ist ebenfalls eine Notabschaltung sinnvoll. Wenn der Minimaldurchflusswächter anzeigt, dass zu wenig Flüssigkeit gefördert wird, ist ebenfalls eine Notabschaltung erforderlich.

Insbesondere ist dem Eingangsanschluss und/oder dem Ausgangsanschluss eine beidseitig sperrende Flüssigkeitskupplung zugeordnet. Dadurch lässt sich die Flüssigkeitskühlungsvorrichtung als autonomes Modul auf einfache Weise an Anschlüsse einer Brennstoffzelleneinrichtung anschließen.

Ganz besonders vorteilhaft ist es, wenn die Flüssigkeitskühlungsvorrichtung autonom ausgebildet ist, wobei eine Temperaturregelung für die Kühlung auf internen Messungen basiert ist. Die Flüssigkeitskühlungsvorrichtung muss dadurch keine Steuerungssignale bzw. Regelungssignale von einer Brennstoffzelleneinrichtung bzw. einer Steuerungseinrichtung eines Brennstoffzellensystems empfangen. Dadurch lässt sich die Flüssigkeitskühlungsvorrichtung universell einsetzen.

Bei einer Ausführungsform ist ein Kreislauf vorgesehen, in welchem einer Wasserstoffsorptionsspeichereinrichtung erwärmte Flüssigkeit zur Desorption von Wasserstoff bereitstellbar ist. Grundsätzlich wird in die erfindungsgemäße Flüssigkeitsvorrichtung erwärmte Flüssigkeit eingekoppelt. Ein Teilstrom dieser erwärmten Flüssigkeit lässt sich zur Bereitstellung von Wasserstoff über Desorption bei einer Wasserstoffsorptionsspeichereinrichtung nutzen.

In dem Kreislauf ist eine Wärmeübertragungseinrichtung angeordnet, welche in thermischem Kontakt mit der Wasserstoffsorptionsspeichereinrichtung steht. Die Wärmeübertragungseinrichtung kann dabei in die Wasserstoffsorptionsspeichereinrichtung integriert sein.

Insbesondere ist dabei der Kreislauf dem Eingangsanschluss für Flüssigkeit nachgeschaltet, sodass sich ein entsprechender Teilstrom abzweigen lässt und nutzen lässt.

Günstig ist es, wenn in dem Kreislauf ein Schaltventil für die Durchströmung einer Wärmeübertragungseinrichtung für die Flüssigkeit angeordnet ist, welches temperaturgesteuert ist. Insbesondere erfolgt die Temperatursteuerung über die Temperatur der Flüssigkeit. Dadurch lässt sich über das Schaltventil die Durchströmung der Wärmeübertragungseinrichtung sperren, wenn eine Temperaturschwelle unterschritten ist. Es lässt sich dann verhindern, wenn die Flüssigkeit "zu kalt" ist, dass die Wasserstoffsorptionsspeichereinrichtung in dem relevanten Bereich unter die Desorptionstemperatur von Wasserstoff abgekühlt wird. Das Schaltventil ist beispielsweise durch ein Regelventil mit einstellbarer Schaltschwelle realisiert.

Günstig ist es, wenn eine Vermischungseinrichtung vorgesehen ist, durch welche ein Strom an erwärmter Flüssigkeit, welcher vom Eingangsanschluss bereitgestellt ist, und ein Strom von der Wasserstoffsorptionsspeichereinrichtung her mischbar und die Mischung dem Zwei-Wege-Ventil bereitstellbar ist. Die Flüssigkeit, welche von der Wasserstoffsorptionsspeichereinrichtung her kommt, ist abgekühlt aufgrund Wärmeabgabe an die Wasserstoffsorptionsspeichereinrichtung. Durch eine entsprechende Mischung lässt sich die Temperatur der abzukühlenden Flüssigkeit verringern.

Es ist ferner günstig, wenn eine Aufteilungsvorrichtung vorgesehen ist, durch welche ein Flüssigkeitsstrom, welcher vom Eingangsanschluss bereitgestellt ist, in einen Teilstrom für den Kreislauf und in einen weiteren Teilstrom aufteilbar ist. Dadurch wird nur ein Teilstrom für die Wasserstoffbereitstellung abgezweigt. Der andere Teilstrom wird beispielsweise in einer Mischungseinrichtung eingekoppelt, in die an der Wasserstoffsorptionsspeichereinrichtung abgekühlte Flüssigkeit eingekoppelt wird.

Bei einer Ausführungsform ist in dem Kreislauf eine Pumpe angeordnet. Dadurch lässt sich insbesondere im Zusammenhang mit einer Einstellung des Massendurchflusses eine definierte Wasserstoffbereitstellung über Desorption erreichen.

Günstig ist es, wenn der Pumpe ein Flüssigkeitsbehälter vorgeschaltet ist. Dadurch lässt sich Kavitation an der Pumpe vermeiden.

Grundsätzlich ist es möglich, dass in dem Kreislauf eine rein thermohydraulische Nutzung oder Nutzung mittels Dehnstoffelement von erwärmter Flüssigkeit für die Wasserstoffdesorption erfolgt. Es kann auch vorgesehen sein, dass in dem Kreislauf eine Flusseinstellungseinrichtung angeordnet ist, über die sich der Massenstrom an erwärmter Flüssigkeit in dem Kreislauf einstellen lässt.

Erfindungsgemäß wird auch ein Brennstoffzellensystem bereitgestellt, welches eine Brennstoffzelleneinrichtung und eine erfindungsgemäße Flüssigkeitskühlungsvorrichtung umfasst, wobei die Flüssigkeitskühlungsvorrichtung an die Brennstoffzelleneinrichtung fluidwirksam (bezüglich der Ausbildung eines Kreislaufs für Kühlflüssigkeit) angeschlossen ist.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung eines Ausführungsbeispiels eines Brennstoffzellensystems;
- Figur 2: eine schematische Blockschaltbilddarstellung eines Ausführungsbeispiels einer Flüssigkeitskühlungsvorrichtung;
- Figur 3: eine Variante der Flüssigkeitskühlungsvorrichtung gemäß Figur 2;
- Figur 4: eine schematische Darstellung von unterschiedlichen Betriebsmoden in Abhängigkeit von der Temperatur T, wobei die durchgezogene Kurve die Anzahl N von betriebenen Lüftern andeutet und D die Drehzahl von betriebenen Lüftern;
- Figur 5: ein weiteres Ausführungsbeispiel mit angeschlossener Wasserstoffsorptionsspeichereinrichtung; und
- Figur 6: eine Variante einer Flüssigkeitskühlungsvorrichtung mit angeschlossener Wasserstoffsorptionsspeichereinrichtung.

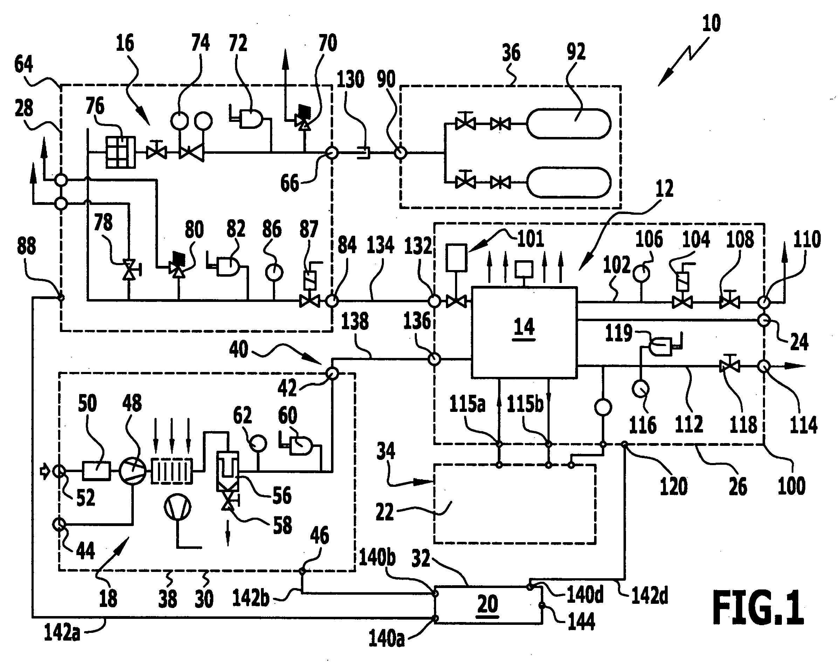

Ein Ausführungsbeispiel eines Brennstoffzellensystems, welches in Figur 1 gezeigt und dort mit 10 bezeichnet ist, umfasst eine Brennstoffzelleneinrichtung 12 mit einem oder mehreren Brennstoffzellenblöcken 14. Die Brennstoffzelleneinrichtung 12 ist die Brennstoffzellen-Kerneinrichtung des Brennstoffzellensystems 10. Ferner umfasst das Brennstoffzellensystem 10 eine Brennstoff-Versorgungseinrichtung 16, mittels welcher der oder die Brennstoffzellenblöcke 14 der Brennstoffzelleneinrichtung 12 mit Brennstoff versorgbar sind.

Weiterhin umfasst das Brennstoffzellensystem 10 eine Oxidator-Versorgungseinrichtung 18 für die Brennstoffzelleneinrichtung 12, mittels der dem oder den Brennstoffzellenblöcken 14 Oxidator bereitstellbar ist.

Zur Steuerung des Brennstoffzellensystems 10 ist eine Steuerungseinrichtung 20 vorgesehen.

Dem oder den Brennstoffzellenblöcken 14 kann eine Kühlungseinrichtung 22 zugeordnet sein.

Bei den Brennstoffzellen des oder der Brennstoffzellenblöcke 14 handelt es sich insbesondere um Polymermembran-Brennstoffzellen (PEFC), bei denen der Elektrolyt durch eine protonenleitende Membran gebildet ist. Neben der Funktion des Elektrolyten ist die Membran auch Katalysatorträger für die anodischen und kathodischen Elektrokatalysatoren und dient als Separator für die gasförmigen Reaktanten. Als Brennstoff wird Wasserstoff eingesetzt und als Oxidator Sauerstoff und insbesondere Luftsauerstoff. Der Brennstoffzelleneinrichtung 12 wird dann Luft mit Luftsauerstoff als Oxidator zugeführt.

In dem oder den Brennstoffzellenblöcken 14 wird chemische Energie durch die kalte Verbrennung des Brennstoffs mit dem Oxidator in elektrische Energie umgewandelt. Diese elektrische Energie ist über einen Anschluss 24 an einen Verbraucher abgebbar.

Das Brennstoffzellensystem 10 ist modular aufgebaut mit einem Brennstoffzelleneinrichtungs-Modul 26, einem Brennstoff-Versorgungseinrichtungs-Modul 28 und einem Oxidator-Versorgungseinrichtungs-Modul 30.

Ferner ist ein Steuerungseinrichtungs-Modul 32 vorgesehen, welches die Steuerungseinrichtung 20 umfasst.

Die Kühlungseinrichtung 22 ist in ein Kühlungseinrichtungs-Modul 34 integriert, welches umstehend näher beschrieben ist.

Bei dem gezeigten Ausführungsbeispiel ist ein Brennstoffspeicher-Modul 36 vorgesehen.

Es ist alternativ auch möglich, dass Brennstoffspeicher in das Brennstoff-Versorgungseinrichtungs-Modul 28 integriert sind.

In das Oxidator-Versorgungseinrichtungs-Modul 30 sind die funktionellen Komponenten der Oxidator-Versorgungseinrichtung 18 integriert. Das Oxidator-Versorgungseinrichtungs-Modul 30 weist ein geschlossenes Gehäuse 38 auf. Das Gehäuse kann gasdicht ausgestaltet sein. Beispielsweise ist das Gehäuse durchsichtig. Ein mögliches Material ist Plexiglas.

Das Oxidator-Versorgungseinrichtungs-Modul 30 ist mit einer Kommunikationsschnittstelle 40 versehen, welche einen Ausgangsanschluss 42 aufweist, über den Oxidator auskoppelbar ist. Insbesondere ist Luft als Oxidatorträger mit Luftsauerstoff als Oxidator auskoppelbar.

Ferner ist ein elektrischer Anschluss 44 vorgesehen, über den elektrische Energie in das Oxidator-Versorgungseinrichtungs-Modul 30 zur Bereitstellung an elektrische Verbraucher dieses Moduls einkoppelbar ist.

Weiterhin kann ein Signalanschluss 46 zur Einkopplung von Steuerungssignalen vorgesehen sein.

Die entsprechenden Anschlüsse 42, 44 und 46 sind an dem Gehäuse 38 angeordnet.

In dem Gehäuse 38 ist ein Luftverdichter 48 angeordnet. Diesem ist ein Filter 50 vorgeschaltet. Das Gehäuse 38 weist eine oder mehrere Luftzuführungsöffnungen 52 auf, über die Luft dem Luftverdichter 48 zuführbar ist, wobei der Filter 50 durch die zugeführte Luft passiert werden muss. An der oder den Luftzuführungsöffnungen 52 ist ein Luftförderer und Kühler 54 angeordnet, welcher insbesondere über einen Elektromotor angetrieben ist.

In dem Gehäuse 38 ist dem Luftverdichter 48 ein Wasserabscheider 56 nachgeschaltet. Über diesen Wasserabscheider 56 lässt sich durch das Oxidator-Versorgungseinrichtungs-Modul 30 durchgeführte Luft entfeuchten. Dem Wasserabscheider 56 ist dabei ein Stellelement 58 zugeordnet, welches in Verbindung mit einem Ausgang steht, über den Wasser abgelassen werden kann.

Ferner umfasst das Oxidator-Versorgungseinrichtungs-Modul 30 einen Druckschalter 60 und eine Druckanzeige 62. Mittels des Druckschalters 60 lässt sich ein bestimmter Luftdruck/Luftstrom des Luftverdichters 48 überprüfen. Dieser Luftdruck/Luftstrom wird durch eine Stellvorrichtung (wie beispielsweise das Einstellventil 118) fest vorgegeben. Der Luftstrom lässt sich an dem Ausgangsanschluss 42 auskoppeln.

Für die Einstellung des Versorgungseinrichtungs-Moduls 30 kann eine Stellvorrichtung auch direkt an das Modul 30 angeschlossen und/oder nur vorübergehend angeschlossen werden.

Das Oxidator-Versorgungseinrichtungs-Modul 38 bildet eine als Ganzes positionierbare Einheit. Die Verbindung mit dem Steuereinrichtungs-Modul 32 erfolgt über die Kommunikationsschnittstelle 40. Die Verbindung mit dem Brennstoffzelleneinrichtungs-Modul 26 erfolgt über den Anschluss 42 (als Stoffstrom-Schnittstelle). Elektrische Verbraucher des Oxidator-Versorgungseinrichtungs-Moduls 30 werden über das Steuereinrichtungs-Modul 32 mit elektrischer Energie (die an dem elektrischen Anschluss 44 eingekoppelt wird) versorgt.

Das Brennstoff-Versorgungseinrichtungs-Modul 28 weist ein Gehäuse 64 auf, in welchem die funktionellen Komponenten der Brennstoff-Versorgungseinrichtung 16 angeordnet sind. Das Gehäuse 64 ist insbesondere geschlossen und gasdicht ausgebildet. Es ist vorzugsweise vorgesehen, dass Führungen für Brennstoff innerhalb des Brennstoff-Versorgungseinrichtungs-Moduls 28 rohrfrei ausgebildet sind. Beispielsweise ist das Gehäuse 64 mittels eines Kunststoffblocks gebildet und die entsprechenden Strömungsführungen sind durch Bohrungen in dem Kunststoffblock gebildet. Es wird dadurch eine Art von Bussystem für die Strömungsführung des Brennstoffs innerhalb des Brennstoff-Versorgungseinrichtungs-Moduls 28 bereitgestellt.

Bei dem in Figur 1 gezeigten Ausführungsbeispiel sind Brennstoffspeicher außerhalb des Brennstoff-Versorgungseinrichtungs-Moduls 28 angeordnet. Es ist dazu ein eigenes Brennstoffspeicher-Modul 36 vorgesehen. Um Brennstoff, welcher von dem Brennstoffspeicher-Modul 36 geliefert wird, einkoppeln zu können, ist an dem Gehäuse 64 ein Anschluss 66 zur Einkopplung von Brennstoff vorgesehen. Dieser Anschluss 66 steht in fluidwirksamer Verbindung mit einer Brennstoffführung 68 innerhalb des Gehäuses 64. An diese Brennstoffführung 68 ist ein Sicherheitsventil 70 gekoppelt. Weiterhin ist ein Druckschalter 72 vorgesehen, über den der Druck des innerhalb des Gehäuses 64 geführten Brennstoffs (insbesondere Wasserstoff) überprüfbar ist. Dem Druckschalter 72 ist eine Druckminderer-/Einstellvorrichtung 74 mit Druckanzeige nachgeschaltet. Weiterhin ist eine Flammensperre 76 vorgesehen.

Auf die Flammensperre 76 folgend ist ein Ablassventil 78 in der Brennstoffführung 68 angeordnet. Über das Ablassventil 78 lässt sich in dem Gehäuse 64 befindlicher gasförmiger Brennstoff auskoppeln.

Weiterhin ist ein weiteres Sicherheitsventil 80 vorgesehen.

Über einen weiteren Druckschalter 82 lässt sich der Druck von an einem Anschluss 84 auskoppelbaren Brennstoff überprüfen. Über eine Druckanzeige 86 ist dieser Druck anzeigbar. Ein nachfolgendes Ventil 87 ermöglicht eine sichere Absperrung des Ausgangsanschlusses 84.

Das Brennstoff-Versorgungseinrichtungs-Modul 28 weist eine Kommunikationsschnittstelle auf, welche die Anschlüsse 66 und 84 umfasst. Weiterhin kann ein Steuersignalanschluss 88 vorgesehen sein. Für die Einkopplung von elektrischer Energie zur Bereitstellung an elektrische Verbraucher des Brennstoff-Versorgungseinrichtungs-Moduls 28 kann ein elektrischer Anschluss vorgesehen sein (in Figur 1 nicht gezeigt).

Das Brennstoff-Versorgungseinrichtungs-Modul 28 bildet eine Einheit, welche als Ganzes positionierbar ist.

Das Brennstoffspeicher-Modul 36 weist eine Schnittstelle 90 auf, über welche Brennstoff auskoppelbar (oder einkoppelbar) ist und insbesondere dem Brennstoff-Versorgungseinrichtungs-Modul 28 zuführbar ist. Das Brennstoffspeicher-Modul 36 weist einen oder mehrere Brennstoffspeicher 92 auf, in denen beispielsweise Wasserstoff gasförmig gespeichert ist.

Es können auch ein oder mehrere Metallhydridspeicher vorgesehen sein. Ein solcher Metallhydridspeicher ist insbesondere mittels eines Strangpressprofils gebildet.

Ein solcher Metallhydridspeicher kann ein strukturelles Element des Brennstoffzellensystems 10 oder einer Anwendung sein. Da der Metallhydridspeicher mit seinem Strangpressprofil mechanisch belastbar ist, kann er auch eine tragende Funktion beispielsweise in einem Fahrzeug übernehmen, um Fahrzeugteile abzustützen oder das Brennstoffzellensystem 10 mit seinen Modulen zu halten oder einzelne Module des Brennstoffzellensystems 10 zu halten.

Das Brennstoffspeicher-Modul 36 ist insbesondere so angeordnet und ausgebildet, dass es austauschbar ist. Nach der Entleerung kann es dann entnommen werden und es kann ein neues Brennstoffspeicher-Modul 36 eingesetzt werden mit gefülltem Brennstoffspeicher 92 bzw. gefüllten Brennstoffspeichern 92.

Es ist auch möglich, dass Brennstoffspeicher in das Gehäuse 64 des Brennstoff-Versorgungseinrichtungs-Moduls 28 integriert sind. Es muss dann kein getrenntes Brennstoffspeicher-Modul 36 vorgesehen werden, sondern es ist ein Kombinationsmodul gebildet, welches die Brennstoffversorgungseinrichtung 16 und den oder die Brennstoffspeicher umfasst. Ein solches Brennstoff-Versorgungseinrichtungs-Modul weist prinzipiell die gleichen funktionellen Komponenten auf, wie anhand des Brennstoff-Versorgungseinrichtungs-Moduls 28 beschrieben.

Es ist insbesondere vorgesehen, dass der Brennstoff, welcher an dem Anschluss 84 auskoppelbar ist, auf einen über den Druckschalter 82 vorgegebenen festen Druckwert eingestellt ist. Über die Druckanzeige 86 wird dieser Druckwert angezeigt.

Das Brennstoffzelleneinrichtungs-Modul 26 weist ein Gehäuse 100 auf. Das Gehäuse ist insbesondere geschlossen mit definierter Kühlmediumführung ausgebildet. Beispielsweise ist es durchsichtig.

Dem oder den Brennstoffzellenblöcken 14 kann eine Brennstoff-Vordruck-Regelungseinrichtung 101 vorgeschaltet sein, welche in dem Gehäuse 100 angeordnet ist.

In dem Gehäuse 100 sind der oder die Brennstoffzellenblöcke 14 angeordnet. Ferner ist in dem Gehäuse 100 eine Brennstoff-Abführungsleitung 102 angeordnet. An dieser Abführungsleitung 102 sitzt ein zeitlich steuerbares (Sperr-)Ventil 104. Bei diesem handelt es sich insbesondere um ein elektromagnetisches Ventil. Über eine Druckanzeige 106 wird der Druck angezeigt.

Weiterhin kann ein Einstellventil 108 vorgesehen sein, mit dem der Druckabfall bei Öffnung des Ventils 104 eingestellt werden kann.

Die Abführungsleitung 102 mündet in einen Ausgangsanschluss 110, über den nicht verbrauchter Brennstoff abführbar ist.

In dem Gehäuse 100 ist auch eine Oxidator-Abführungsleitung 112 und insbesondere Luft-Abführungsleitung angeordnet. Diese mündet in einen Ausgangsanschluss 114. An der Abführungsleitung 112 ist eine Druckanzeige 116 gekoppelt. Ferner ist ein Einstellventil 118 vorgesehen, um den Volumenstrom der abgeführten Luft einstellen zu können.

An der Abführungsleitung 112 kann ein Temperaturschalter 119 vorgesehen sein.

Das Brennstoffzelleneinrichtungs-Modul 26 weist einen Eingangsanschluss 115a auf, über welchen eine Flüssigkeit als Kühlmedium in den oder die Brennstoffzellenblöcke 14 einkoppelbar ist. Ferner ist ein Ausgangsanschluss 115b vorgesehen, über welchen erwärmtes Kühlmedium auskoppelbar ist. An den Eingangsanschluss 115a und den Ausgangsanschluss 115b ist das Kühleinrichtungs-Modul 34 anschließbar.

Das Brennstoffzelleneinrichtungs-Modul 26 weist einen Steuersignalanschluss 120 auf, über den Steuersignale einkoppelbar sind. Insbesondere ist dabei das Ventil 104 (welches ein Sperrventil ist) ansteuerbar. Dieses Sperrventil 104 wird so gesteuert, dass es entweder offen oder geschlossen ist. Es ist getaktet steuerbar und kann dabei so getaktet geöffnet werden, dass für eine Brennstoffentspannung von dem Brennstoffzellenblock 14 her gesorgt ist.

Der Anschluss 24, über welchen externe elektrische Verbraucher mit elektrischer Leistung versorgt sind, ist an dem Gehäuse 100 angeordnet.

Es können auch elektrische Anschlüsse vorgesehen sein (in der Figur 1 nicht gezeigt), über die elektrische Leistung für interne Verbraucher des Brennstoffzelleneinrichtungs-Moduls 26 einkoppelbar ist.

Über die beschriebenen Anschlüsse ist eine Kommunikationsschnittstelle für das Brennstoffzelleneinrichtungs-Modul 26 gebildet.

Das Brennstoffzelleneinrichtungs-Modul 26 bildet eine Einheit, die als Ganzes getrennt von den anderen Modulen positionierbar ist.

Es ist ein separates Kühlungseinrichtungs-Modul 34 vorgesehen, welches an das Brennstoffzelleneinrichtungs-Modul 26 koppelbar ist.

Das Brennstoffzelleneinrichtungs-Modul 26, das Brennstoff-Versorgungseinrichtungs-Modul 28, das Oxidator-Versorgungseinrichtungs-Modul 30, das Steuerungseinrichtungs-Modul 32 und das Kühleinrichtungs-Modul 34 sind getrennt und unabhängig voneinander positionierbar. Die Kommunikation untereinander erfolgt über die entsprechenden Schnittstellen:
Zur direkten Ankopplung des Brennstoffspeicher-Moduls 36 ist beispielsweise eine Kupplung 130 und insbesondere eine Schnellkupplung vorgesehen. Eine Brennstoffleitung ist dann über diese Kupplung gebildet.

Es ist auch möglich, dass eine Verbindung über eine Leitung erfolgt, welche an den Anschluss 66 der Brennstoff-Versorgungseinrichtungs-Moduls 28 angekoppelt wird und an die Schnittstelle 90 des Brennstoffspeicher-Moduls 36 angekoppelt wird.

Das Brennstoff-Versorgungseinrichtungs-Modul 28 kommuniziert mit dem Brennstoffzelleneinrichtungs-Modul 26 über seinen Ausgangsanschluss 84 für Brennstoff. An einem Eingangsanschluss 132 des Brennstoffzelleneinrichtungs-Moduls 26 kann Brennstoff eingekoppelt werden. Zur Führung des Brennstoffs zwischen dem Brennstoff-Versorgungseinrichtungs-Modul 28 und dem Brennstoffzelleneinrichtungs-Modul 26 ist eine Leitung 134 vorgesehen, welche ein von den beiden Modulen getrenntes Element ist. Die Leitung wird je nach Position und Abstand der beiden Module gewählt.

Luft mit Luftsauerstoff als Oxidator lässt sich an dem Ausgangsanschluss 42 des Oxidator-Versorgungseinrichtungs-Moduls 30 auskoppeln. Das Brennstoffzelleneinrichtungs-Modul 26 weist einen Eingangsanschluss 136 auf, über den sich Luft einkoppeln lässt. Die Anschlüsse 42 und 136 lassen sich über eine Leitung 138 verbinden, wobei diese Leitung 138 ein von dem Oxidator-Versorgungseinrichtungs-Modul 30 und dem Brennstoffzelleneinrichtungs-Modul 26 getrenntes Element ist.

Das Steuerungseinrichtungs-Modul 32 bildet ebenfalls eine Einheit, welche als Ganzes unabhängig von den anderen Modulen positionierbar ist. Es weist entsprechende Anschlüsse 140a, 140b, 140c, 140d auf, über die Steuersignale an mit Steuersignalen beaufschlagbare Module auskoppelbar sind. An die Anschlüsse lassen sich Steuersignalleitungen 142a usw. koppeln, um die Steuersignale übertragen zu können.

Ferner weist das Steuerungseinrichtungs-Modul 32 einen oder mehrere Anschlüsse 144 für elektrische Energie auf. Aus diesen lässt sich elektrische Energie auskoppeln und über entsprechende Leistungen an entsprechende Energieanschlüsse der Module koppeln. Dadurch lassen sich elektrische Verbraucher der entsprechenden Module dann mit Energie versorgen.

Das Brennstoffzellensystem 10 funktioniert so, dass Zuführungsparameter von Brennstoff (über das Brennstoff-Versorgungseinrichtungs-Modul 28) und Oxidator (über das Oxidator-Versorgungseinrichtungs-Modul 30) fest vorgegeben werden, wobei auf der Zuführungsseite der Druck des einem Brennstoffzellenblock 14 zugeführten Brennstoffs vorgegeben wird, eine kontinuierliche Wasserstoffabführung aus einem Brennstoffzellenblock 14 gesperrt wird und eine Menge des einem Brennstoffzellenblock 14 zugeführten Brennstoffs durch die Leistungsaufnahme eines (externen) Verbrauchers geregelt wird.

Ein solches Verfahren sowie weitere Verfahrensdetails und die detaillierte Ausbildung des entsprechenden Brennstoffzellensystems sind in der DE 100 27 600 A1 und DE 100 27 600 C2 sowie der DE 101 27 599 A1 und der DE 101 27 599 C2 beschrieben. Auf diese Dokumente wird Bezug genommen.

Insbesondere ist mittels der Steuerungseinrichtung 20 eine Ablaufsteuerung gebildet, welche voreingestellte Steuerungssignale sendet. Eine Regelung der Zuführung ist bei der beschriebenen Verfahrensdurchführung nicht notwendig.

Das Brennstoffzellensystem ist aus mindestens bezüglich der Positionierbarkeit unabhängigen Subsystemen zusammengesetzt, nämlich dem Brennstoffzelleneinrichtungs-Modul 26, dem Brennstoff-Versorgungseinrichtungs-Modul 28, dem Oxidator-Versorgungseinrichtungs-Modul 30, dem Steuerungseinrichtungs-Modul 32 und dem Kühleinrichtungs-Modul 34.

Die Module weisen definierte Schnittstellen zur Kommunikation mit anderen Modulen auf. Die Module sind getrennt. In ihnen sind die entsprechenden funktionellen Komponenten fest angeordnet, so dass ein Modul als Einheit positionierbar ist. Verbindungselemente und insbesondere Leitungen verbinden miteinander kooperierende Module.

Pro Modul lassen sich die Betriebsparameter und insbesondere Stoffströme, elektrische Ströme und Signalströme separat einstellen.

Die Module lassen sich getrennt herstellen.

Ein sicherheitsrelevanter Aspekt ist die Brennstoffführung in dem Brennstoffzellensystem 10. Durch die Modulbauweise ist aber nicht das Brennstoffzellensystem 10 als Ganzes betroffen, sondern nur die Module, in denen Brennstoff geführt wird, d. h. das Brennstoff-Versorgungseinrichtungs-Modul 28 (gegebenenfalls auch das Brennstoffspeicher-Modul 36) sowie das Brennstoffzelleneinrichtungs-Modul 26 und die Leitung 134. Innerhalb des Brennstoffzelleneinrichtungs-Moduls 26 und des Brennstoff-Versorgungseinrichtungs-Moduls 28 lässt sich der Brennstoff beispielsweise in Bohrungen führen, welche durch Ausnehmungen in einem Vollmaterial gebildet sind. Es sind dadurch keine Rohre notwendig, die leckschlagen können. Auch lassen sich die entsprechenden Module 26 und 28 gasdicht ausbilden, während das gesamte Brennstoffzellensystem 10 dann nicht mehr gasdicht ausgebildet werden muss.

Weiterhin lassen sich die Module 26 und 28 mit einer Sicherheitsbelüftung an die Umgebung außerhalb des Gesamtsystems versehen.

Durch die Modularisierung des Brennstoffzellensystems 10 lässt sich dieses flexibel aufbauen. Insbesondere ist eine Anpassung an geometrische Gegebenheiten möglich. Weiterhin lässt sich jedes Modul für sich optimieren.

Die Leitungen zwischen Modulen sind unabhängig von den Modulen. Sie lassen sich beispielsweise über Sicherheitskupplungen, wenn Stofftransportleitungen vorgesehen sind, an die Module anschließen.

Auch eine leichte Reparatur oder Austausch von Komponenten des Brennstoffzellensystems 10 ist möglich, da Module als Ganzes ausgetauscht werden können. Beispielsweise wird ein Brennstoff-Versorgungseinrichtungs-Modul und/oder ein Brennstoffspeicher-Modul als Ganzes ausgetauscht.

Weiterhin ergibt sich auch eine leichte Zerlegbarkeit und Zusammensetzbarkeit des Brennstoffzellensystems 10.

Insbesondere wenn Metallhydridspeicher eingesetzt werden, dann kann ein Brennstoffspeicher oder ein Brennstoffspeicher-Modul auch ein strukturelles Element einer Anwendung bilden. Insbesondere kann ein solcher Metallhydridspeicher als tragendes Strukturelement eingesetzt werden. Der nötige Brennstoff wird dabei "on board" mitgeführt. Der notwendige Oxidator stammt aus der Umgebungsluft.

Erfindungsgemäß wird ein einfaches Brennstoffzellensystem 10 bereitgestellt, welches insbesondere luftgekühlt ist. Es lässt sich auf flexible Weise aufgrund seines modularen Aufbaus in eine Anwendung integrieren. Der Betrieb muss nicht beaufsichtigt werden.

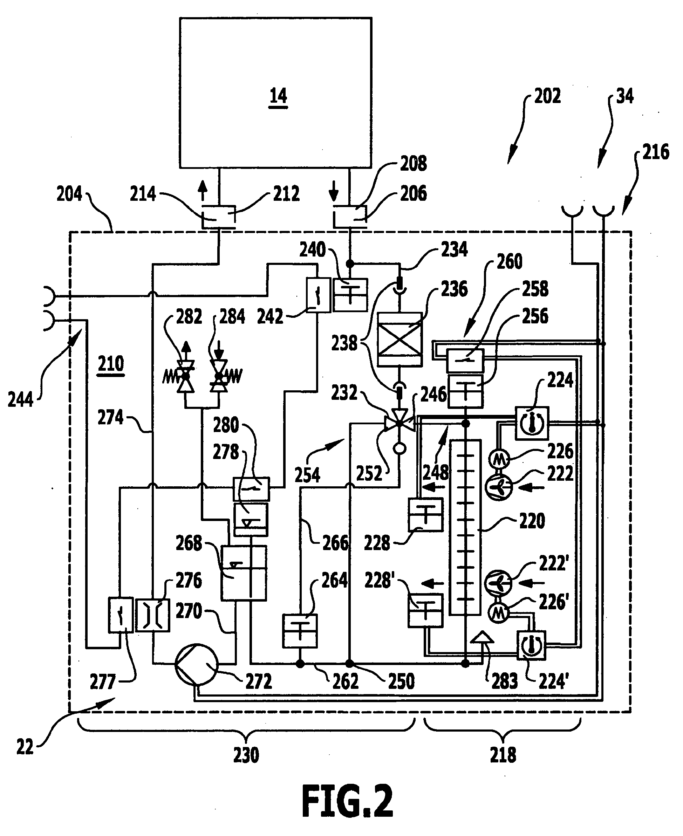

Ein Ausführungsbeispiel einer Flüssigkeitskühlungsvorrichtung, welches in Figur 2 in schematischer Darstellung gezeigt und dort mit 202 bezeichnet ist, ist als Kühleinrichtungs-Modul 34 ausgebildet. Die Flüssigkeitskühlungsvorrichtung 202 weist ein (geschlossenes) Gehäuse 204 auf. In diesem Gehäuse 204 ist die Kühlungseinrichtung 22 angeordnet.

An dem Gehäuse ist ein Eingangsanschluss 206 für (zu kühlende) Flüssigkeit angeordnet. Insbesondere ist der Eingangsanschluss 206 durch eine beidseitig sperrende Flüssigkeitskupplung 208 gebildet. Über den Eingangsanschluss 206 ist Flüssigkeit in einen Innenraum 210 des Gehäuses 204 einkoppelbar.

Weiterhin ist an dem Gehäuse 204 ein Ausgangsanschluss 212 für (Kühl-)Flüssigkeit angeordnet. Der Ausgangsanschluss 212 ist insbesondere durch eine beidseitig sperrende Flüssigkeitskupplung 214 gebildet. Der Eingangsanschluss 206 ist an den Ausgangsanschluss 115b der Brennstoffzelleneinrichtung 14 anschließbar. Der Ausgangsanschluss 212 ist an den Eingangsanschluss 115a der Brennstoffzelleneinrichtung 14 anschließbar. In Figur 2 ist der angeschlossene Zustand angedeutet.

Ferner ist an dem Gehäuse 204 eine Anschlusseinrichtung 216 für die elektrische Stromversorgung der Flüssigkeitskühlungsvorrichtung 202 angeordnet. Über die Anschlusseinrichtung 216 ist elektrische Energie bereitstellbar.

Wie unten noch näher erläutert wird, sind bei der erfindungsgemäßen Flüssigkeitskühlungsvorrichtung 202 grundsätzlich keine Signalanschlüsse zur Einkopplung externer Steuerungs- und/oder Regelungssignale notwendig. Die Flüssigkeitskühlungsvorrichtung 202 ist als selbstregelndes autonomes System ausgebildet.

Die Kühlungseinrichtung 22 umfasst eine erste Baugruppe 218 (Radiator-Baugruppe) mit einem Radiator 220 und mindestens einem Lüfter 222, der so ausgerichtet ist, dass sein Luftstrom den Radiator 220 beaufschlagt. Bei einem bevorzugten Ausführungsbeispiel sind mehrere Lüfter vorgesehen, welche beispielsweise in einer Reihe längs des Radiators 220 angeordnet sind. Die Anzahl der Lüfter 222 hängt ab von der Leistung des oder der Brennstoffzellenblöcke 14, die zu kühlen sind.

Bei einem konkreten Ausführungsbeispiel einer Flüssigkeitskühlungsvorrichtung 202 mit einer thermischen Leistung von 880 W sind vier Lüfter 222 vorgesehen. Bei einer thermischen Leistung von 1200 W sind mindestens fünf Lüfter 222 vorgesehen.

Jeder Lüfter 222 ist individuell drehzahlgeregelt. Dazu ist jeweils ein Drehzahlregler 224 vorgesehen, welcher einen Lüftermotor 226 ansteuert.

Jedem Lüfter 222 ist ein eigener Temperatursensor 228 zugeordnet. Beispielsweise liegt der Radiator 220 zwischen einem jeweiligen Temperatursensor 228 und einem Lüfter 222.

Der jeweilige Temperatursensor 228 ist an den zugeordneten Drehzahlregler 224 gekoppelt und stellt ihm Temperaturmesswerte bereit.

In Figur 2 sind weitere Lüfter durch die Bezugszeichen 222' usw. angedeutet.

Die Temperatursensoren 228, 228' messen insbesondere die Lufttemperatur am Radiator 220 im Luftstrom des zugeordneten Lüfters 222.

Ferner umfasst die Kühleinrichtung 22 eine zweite Baugruppe 230, welche Elemente für die Kreislaufführung von Flüssigkeit in dem Gehäuse 204 umfasst.

In dem Gehäuse 204 ist ein Zwei-Wege-Ventil 232 angeordnet, welches insbesondere als Drei-Zwei-Wege-Ventil mit drei Anschlüssen und zwei Strömungswegen ausgebildet ist. Das Zwei-Wege-Ventil 232 ist ein internes Ventil des Moduls 34. Von dem Eingangsanschluss 206 führt eine Leitung 234 für Flüssigkeit zu einem Eingang des Zwei-Wege-Ventils 232. An der Leitung 234 ist eine Filtereinrichtung 236 angeordnet, welche insbesondere einen Ionentauscher-Festbettfilter umfasst. Die Filtereinrichtung 236 ist über eine lösbare Verbindung wie beispielsweise eine Steckkupplung 238 positioniert. Dadurch ist ein leichter Austausch ermöglicht.

An der Leitung 234 ist ferner ein Temperatursensor 240 angeordnet, welchem ein Grenzwertschalter 242 zugeordnet ist. Der Temperatursensor 240 misst die Temperatur der über den Eingangsanschluss 206 einströmenden Flüssigkeit. Der Grenzwertschalter 242 ist, wie unten noch näher beschrieben wird, Teil einer Alarmeinrichtung 244 zur Überwachung des Betriebs der Flüssigkeitskühlungsvorrichtung 202.

Über einen ersten Ausgang 246 des Zwei-Wege-Ventils 232 ist ein erster (Strömungs-)Weg 248 gebildet. Er umfasst eine oder mehrere Leitungen und führt von dem ersten Ausgang 246 durch den Radiator 220 hindurch bis zu einem Sammelpunkt 250. Durch einen zweiten Ausgang 252 des Zwei-Wege-Ventils 232 ist ein zweiter (Strömungs-)Weg 254 gebildet. Er umfasst eine Leitung, welche von dem zweiten Ausgang 252 zu dem Sammelpunkt 250 führt.

An einer Leitung des ersten Wegs 248 ist ein Temperatursensor 256 angeordnet, welcher die Temperatur der Flüssigkeit im ersten Weg 248 vor Eintritt in den Radiator 220 misst. Dem Temperatursensor 256 ist ein Schalter 258 zugeordnet, welcher Teil einer Schalteinrichtung 260 ist. Dieser Schalter 258 liefert ein Schaltsignal, wenn eine bestimmte Temperaturschwelle überschritten wird (wie unten noch näher erläutert wird), an einen oder mehrere Drehzahlregler. In dem gezeigten Ausführungsbeispiel ist der Schalter 258 an den Drehzahlregler 224' gekoppelt.

Der Sammelpunkt 250 ist an einer Leitung 262 angeordnet. An dieser Leitung 262 sitzt ein Temperatursensor 264, welcher an das Zwei-Wege-Ventil 232 gekoppelt ist. Der Temperatursensor 264 misst die Temperatur von Flüssigkeit, welche aus dem Radiator 220 ausgetreten ist. Entsprechende Temperatursignale werden dem Zwei-Wege-Ventil 232 bereitgestellt. Das Zwei-Wege-Ventil 232 ist temperaturgeregelt aufgrund der Temperaturmesswerte des Temperatursensors 264.

Es ist grundsätzlich möglich, dass das Zwei-Wege-Ventil 232 ein elektronisch gesteuertes Ventil ist. Bei einer bevorzugten Ausführungsform ist das Zwei-Wege-Ventil als Thermostatventil und insbesondere als Thermohydraulikventil ausgebildet. Der Temperatursensor 264, welcher ein Fühler für das Zwei-Wege-Ventil 232 ist, ist dann über eine Hydraulikleitung 266 mit dem Zwei-Wege-Ventil 232 verbunden. Die gemessene Temperatur bestimmt direkt die Ventilstellung des Zwei-Wege-Ventils 232 über eine Hydraulikflüssigkeit in der Hydraulikleitung 266.

Die Ventilstellung des Zwei-Wege-Ventils 232 wiederum bestimmt die Massenstromaufteilung von Flüssigkeit, welche von dem mindestens einen Brennstoffzellenblock 14 kommt, auf den ersten Weg 248 und den zweiten Weg 254. Dabei ist der zweite Weg 254 ein Bypass-Weg, welcher den Radiator umgeht.

Vorzugsweise ist das Zwei-Wege-Ventil 232 derart einstellbar, dass eine Temperatur einstellbar ist, bei welcher dieses zu dem ersten Weg 248 öffnet, d. h. es ist die Temperatur einstellbar, bei der eine Massenstromaufteilung auf den ersten Weg 248 und den zweiten Weg 254 beginnt.

Die Leitung 262 führt zu einem innerhalb des Gehäuses 204 angeordneten Flüssigkeitsvorrat 268. Gekühlte Flüssigkeit lässt sich in dem Flüssigkeitsvorrat 268 pufferspeichern.

Von dem Flüssigkeitsvorrat 268 führt eine Leitung 270 zu einer (Umwälz-)Pumpe 272. Die Umwälzpumpe 272 ist auf einem festen Arbeitspunkt betrieben. Sie sorgt für eine Förderung der Flüssigkeit durch die Flüssigkeitskühlungsvorrichtung 202 hindurch. Die Flüssigkeit wird dabei in einem konstanten Massenstrom transportiert, wenn die Pumpe 272 auf einem festen Arbeitspunkt (und insbesondere ungeregelt) eingestellt ist.

Es ist dabei grundsätzlich möglich, dass dieser Arbeitspunkt einstellbar ist.

Von der Pumpe 272 führt eine Leitung 274 zu dem Ausgangsanschluss 212. An der Leitung 274 ist ein Minimaldurchflusswächter 276 mit einem Grenzwertschalter 277 angeordnet, welcher prüft, ob ein minimaler Durchfluss, d. h. ein Durchfluss oberhalb eines bestimmten Grenzwerts, erreicht ist. Dieser Minimaldurchflusswächter 276 ist Teil der Alarmeinrichtung 244.

Dem Flüssigkeitsvorrat 268 ist ein Füllstandsmesser 278 mit einem Grenzwertschalter 280 zugeordnet. Es wird überwacht, ob der Flüssigkeitsstand in dem Flüssigkeitsvorrat 268 innerhalb eines bestimmten Bereichs liegt. Der Grenzwertschalter 280 ist Teil der Alarmeinrichtung 244.

Dem Flüssigkeitsvorrat 268 ist ein Überdruck-Sicherheitsventil 282 und ein Unterdruck-Sicherheitsventil 284 zugeordnet.

Die Alarmeinrichtung 244 umfasst, wie oben erwähnt, den Grenzwertschalter 242, den Grenzwertschalter 280 und den Grenzwertschalter 277, welcher dem Minimaldurchflusswächter 276 zugeordnet ist. Diese sind seriell geschaltet. Wenn ein Grenzwert überschritten wird (zu geringer Durchfluss und/oder zu geringer oder zu hoher Flüssigkeitsstand und/oder zu hohe Temperatur von in die Flüssigkeitsvorrichtung 202 eintretender Flüssigkeit), dann wird ein Alarmsignal abgegeben, welches beispielsweise zu einer Notabschaltung führt.

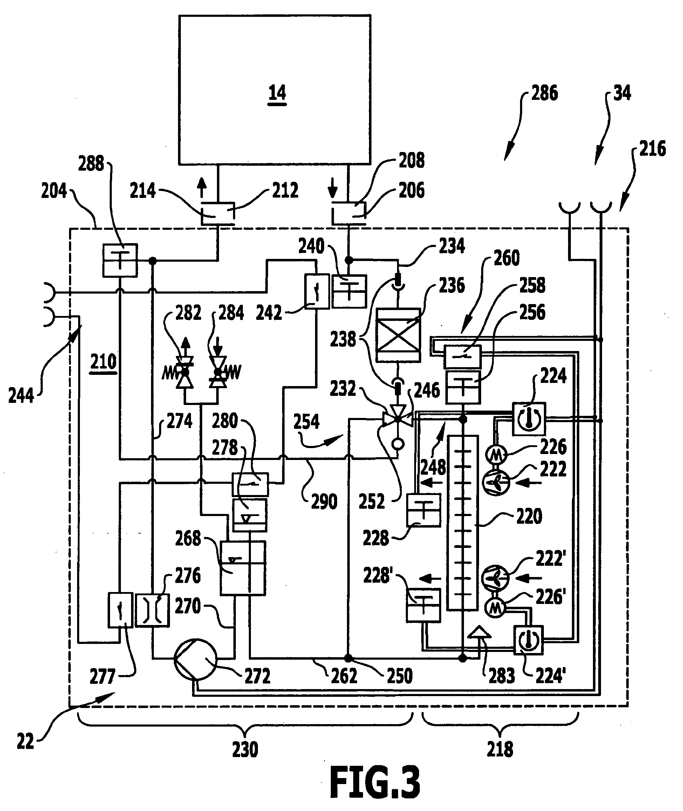

Ein weiteres Ausführungsbeispiel einer Flüssigkeitskühlungsvorrichtung, welches in Figur 3 schematisch gezeigt und dort mit 286 bezeichnet ist, ist eine Variante der Flüssigkeitskühlungsvorrichtung 202. Sie unterscheidet sich in der Anordnung des Temperatursensors, welcher mit dem Zwei-Wege-Ventil 232 verbunden ist. Ansonsten sind alle Elemente gleich ausgebildet und werden mit gleichen Bezugszeichen bezeichnet.

Ein entsprechender Temperatursensor 288 ist unmittelbar vor dem Ausgangsanschluss 212 angeordnet. Er ist über eine Hydraulikleitung 290 mit dem Zwei-Wege-Ventil 232 verbunden. Der Temperatursensor 288 misst die Temperatur der Flüssigkeit in der Leitung 274.

An der Leitung 262 ist ein Entlüfter 283 und insbesondere Automatik-Entlüfter angeordnet.

Es ist grundsätzlich auch möglich, dass der entsprechende Temperaturfühler, welcher mit dem Zwei-Wege-Ventil 232 verbunden ist, einen Temperatursensor aufweist, welcher direkt in dem Flüssigkeitsvorrat 268 angeordnet ist (in der Zeichnung nicht gezeigt), und damit die Temperatur der Flüssigkeit in dem Flüssigkeitsvorrat 268 misst.

Die erfindungsgemäße Flüssigkeitskühlungsvorrichtung funktioniert wie folgt:
Die Flüssigkeitskühlungsvorrichtung ist als autonomes Kühleinrichtungs-Modul 34 ausgebildet, welches an die Brennstoffzelleneinrichtung 12 anschließbar ist. Das Brennstoffzellensystem mit der Brennstoffzelleneinrichtung 12 kann dabei modular aufgebaut sein oder auch nicht-modular aufgebaut sein.

Über den Eingangsanschluss 206 und Ausgangsanschluss 212 wird die Flüssigkeitskühlungsvorrichtung 202 angekoppelt. Flüssigkeit, welche von der Brennstoffzelleneinrichtung 12 bereitgestellt wird, kann die Kühlungseinrichtung 22 durchströmen, dabei abgekühlt werden und wieder der Brennstoffzelleneinrichtung 12 bereitgestellt werden.

Die eingekoppelte Flüssigkeit durchströmt die Filtereinrichtung 236. Bei der Flüssigkeit kann es sich beispielsweise um entsalztes Wasser, Trinkwasser oder Wasser mit Zusätzen wie Frostschutzmittel und/oder Korrosionsschutzmittel handeln.

An der Filtereinrichtung 236 erfolgt eine Reinigung, sofern notwendig.

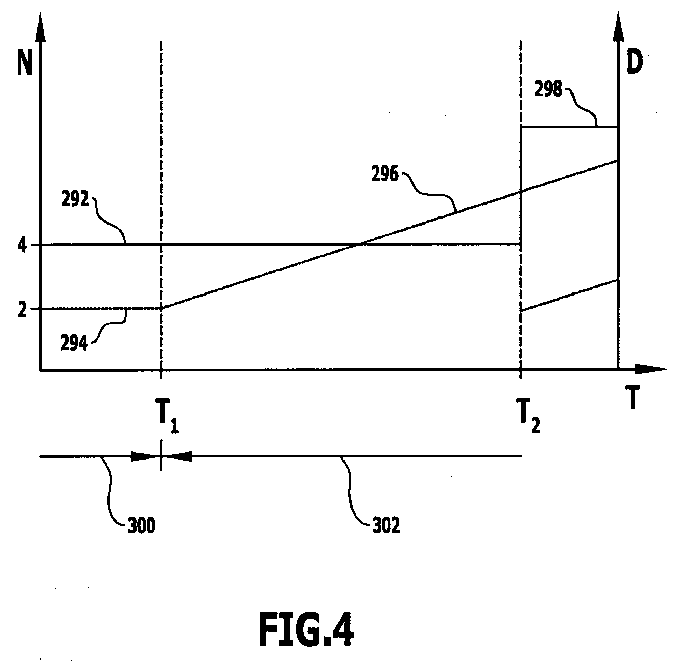

Die Flüssigkeit strömt dann zu dem Zwei-Wege-Ventil 232, welches temperaturgeregelt ist. Unterhalb einer Mindesttemperaturschwelle T₁ (Figur 4) ist das Zwei-Wege-Ventil 232 geschlossen, wobei der erste Weg 248 gesperrt ist. Die Flüssigkeit strömt dann in dem zweiten Weg 254 ohne Massenstromaufteilung zu dem Sammelpunkt 250 und von dort in den Flüssigkeitsvorrat 268.

Die erste Temperaturschwelle T₁ liegt beispielsweise in der Größenordnung von 30°C. Bei Unterschreiten dieser ersten Temperaturschwelle ist keine Kühlung notwendig.

Unterhalb der ersten Temperaturschwelle T₁ ist eine Mindestanzahl an Lüftern 222 angeschaltet. Dies ist in Figur 4 durch das Bezugszeichen 292 angedeutet; bei diesem Ausführungsbeispiel sind zwei Lüfter angeschaltet. Diese drehen sich mit einer Mindestdrehzahl 294. Wenn die Temperaturschwelle T₁ überschritten wird, dann öffnet das Zwei-Wege-Ventil 232 und es folgt eine temperaturabhängige Massenstromaufteilung auf den ersten Weg 248 und den zweiten Weg 254. Da unterhalb der ersten Temperaturschwelle T₁ eine Mindestanzahl an Lüftern 222 mit der Mindestdrehzahl 294 betrieben wird, d. h. da ab Betriebsbeginn der oder die Lüfter 222 bereits mit der Mindestdrehzahl 294 betrieben werden, lässt sich ein "kontinuierlicher" Übergang erreichen. Oberhalb der ersten Temperaturschwelle T₁ sind dann der oder die Lüfter 222 (in dem Beispiel gemäß Figur 4 zwei Lüfter) drehzahlgeregelt und bei Erhöhung der Temperatur, wie sie beispielsweise durch den Temperatursensor 228 gemessen wird, erhöht sich auch die Drehzahl. Dies ist in Figur 4 durch die Kurve 296 angedeutet.

Wenn eine obere Temperaturschwelle T₂, welche beispielsweise in der Größenordnung von 45°C liegt, überschritten wird, dann werden, ausgelöst über den Temperatursensor 256 und den Schalter 258, weitere Lüfter zugeschaltet. Dies ist in Figur 4 durch die Kurve mit dem Bezugszeichen 298 angedeutet. Beispielsweise werden zwei weitere Lüfter hinzugeschaltet. Diese werden beim Zuschalten zunächst mit der Minimaldrehzahl betrieben und es erfolgt dann eine Drehzahlregelung bei weiterer Erhöhung der Temperatur.

Die Zahl der tatsächlich verwendeten Lüfter 222 hängt ab von der thermischen Leistung der Flüssigkeitskühlungsvorrichtung 202.

Die Pumpe 272 pumpt Flüssigkeit mit konstantem Massenstrom durch die Flüssigkeitskühlungsvorrichtung 202. Dadurch lässt sich der Brennstoffzelleneinrichtung 12 auch Kühlflüssigkeit mit einem festen Massenstrom (der aber grundsätzlich einstellbar ist) bereitstellen.

Das temperaturgeregelte Zwei-Wege-Ventil 232 ist als Thermostatventil und insbesondere hydraulisches Thermostatventil ausgebildet. Es findet eine Selbstregelung statt; die über den Temperatursensor 264 bzw. 288 gemessene Flüssigkeitstemperatur bewirkt eine Regelungsrückkopplung und steuert die Ventilstellung des Zwei-Wege-Ventils 232.

In Figur 4 ist das geschlossene Zwei-Wege-Ventil 232 durch den Pfeil mit dem Bezugszeichen 300 angedeutet. In diesem Fall wird die Flüssigkeit in dem Bypass-Weg 254 befördert. Oberhalb der ersten Temperaturschwelle T₁ (Pfeil 302) öffnet sich das Zwei-Wege-Ventil 232 und in Abhängigkeit der Temperatur erfolgt eine Massenstromaufteilung auf den ersten Weg 248 und den zweiten Weg 254, wobei je höher die Temperatur der zu kühlenden Flüssigkeit ist, desto mehr Flüssigkeit wird auf den ersten Weg 248 aufgeteilt.

Die Alarmeinrichtung 244 überwacht die Flüssigkeitskühlungsvorrichtung 202 derart, dass keine Grenzwerte überschritten werden.

Durch die erfindungsgemäße Lösung wird eine Flüssigkeitskühlungsvorrichtung bereitgestellt, welche einen einfachen und kostengünstigen Systemaufbau hat.

Es lässt sich auf einfache Weise ein konstanter (vorzugsweise einstellbarer) Massenstrom an Kühlflüssigkeit der Brennstoffzelleneinrichtung 12 bereitstellen. Dadurch treten keine Veränderungen im Wärmeübergang innerhalb eines Brennstoffzellenblocks 14 bei verschiedenen Temperaturen bzw. verschiedenen thermischen Leistungen auf, da der Massenstrom nicht variiert.

Da die Pumpe 272 mit konstanter Drehzahl betrieben wird, weist diese eine hohe Zuverlässigkeit auf.

Weiterhin lässt sich die Massenstromaufteilung durch ein thermohydraulisch angesteuertes Zwei-Wege-Ventil 232 mit hoher Zuverlässigkeit realisieren. Es ist keine eigene elektronische Teilsystemregelung für die Massenstromaufteilung notwendig.

Ferner muss kein Austausch von Regelinformationen zwischen der Brennstoffzelleneinrichtung 12 bzw. einer übergeordneten Steuerungseinrichtung 20 erfolgen. Die Flüssigkeitskühlungsvorrichtung 202 ist autonom.

Die Flüssigkeitskühlungsvorrichtung lässt sich auch in einer Startphase schnell anfahren. Die Pumpe 272 lässt sich ohne Zeitverzögerung auf einfache Weise zuschalten.

Dadurch lässt sich auch ein Brennstoffzellenblock 14 in einer Startphase schnell aufheizen, um eine optimale Betriebstemperatur zu erreichen, wobei gleichzeitig eine volle Kühlfunktion der Flüssigkeitskühlungsvorrichtung 202 gewährleistet ist; in der Startphase lässt sich die Flüssigkeit in dem zweiten Weg 254 (Bypass-Weg) führen.

Es lässt sich ein schnelles Aufheizen bis zu einer ersten Schwellentemperatur T₁ erreichen und dann ein sanfter Temperaturübergang in einen Betriebsmodus, in dem die Temperatur der Flüssigkeit geregelt ist. Diese Regelung erfolgt durch eine Kombination des temperaturgeregelten Zwei-Wege-Ventils 232 und der Lüfter 222, welche individuell drehzahlgeregelt sind. Ferner lassen sich Lüfter bzw. Lüfterbänke temperaturgesteuert über die Schalteinrichtung 260 zuschalten.

Der Energieverbrauch der Flüssigkeitskühlungsvorrichtung 202 lässt sich minimieren, da elektronische Regelorgane zur Regelung des Flüssigkeitsstroms nicht notwendig sind. Ein Teil der Lüfter 222 lässt über die Schalteinrichtung 260 wegschalten, wenn diese (unterhalb der zweiten Schwellentemperatur T₂) nicht notwendig sind. Ferner lässt sich der Energieverbrauch dadurch minimieren, dass die Pumpe 272 betriebsoptimiert auf einem konstanten Arbeitspunkt betrieben ist.

Die Flüssigkeitskühlungsvorrichtung 202 ist autonom betrieben; die Massenstromregelung durch das Zwei-Wege-Ventil 232 und die Lüfterregelung basiert auf internen Messungen an der Flüssigkeitskühlungsvorrichtung 202. Diese kann selbständig auf Änderungen beispielsweise der thermischen Eingangsleistung und Umgebungstemperatur reagieren.

Durch Vorwahl der Regeltemperatur des Zwei-Wege-Ventils 232 und/oder des Arbeitspunkts der Pumpe 272 lässt sich die Flüssigkeitskühlungsvorrichtung 202 an unterschiedliche Betriebstemperaturniveaus eines Brennstoffzellensystems anpassen.

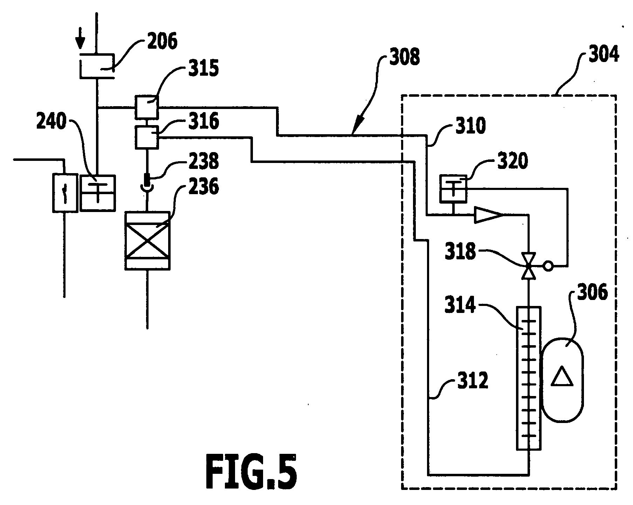

Ein weiteres Ausführungsbeispiel, welches schematisch in einer Teildarstellung in Figur 5 gezeigt ist, weist eine Anschlussmöglichkeit für ein Wasserstoffspeicher-Modul 304 auf. Das Wasserstoffspeicher-Modul 304 wiederum umfasst eine Wasserstoffsorptionsspeichereinrichtung 306. In der Wasserstoffsorptionsspeichereinrichtung 306 ist Wasserstoff durch beispielsweise metallhydridische Sorption gespeichert. Durch insbesondere temperaturindizierte Desorption wird Wasserstoff freigesetzt.

Es ist dazu ein Kreislauf 308 für Flüssigkeit vorgesehen. Dieser Kreislauf 308 umfasst dabei einen ersten Zweig 310, welcher der Wasserstoffsorptionsspeichereinrichtung 306 vorgeschaltet ist, und einen zweiten Zweig 312, welcher der Wasserstoffsorptionsspeichereinrichtung 306 nachgeschaltet ist. Zwischen dem ersten Zweig 310 und dem zweiten Zweig 312 ist eine Wärmeübertragungseinrichtung 314 angeordnet, über die Wärme von erwärmter Flüssigkeit auf die Wasserstoffsorptionsspeichereinrichtung 306 zur Desorption von Wasserstoff übertragbar ist.

Der erste Zweig 310 ist direkt fluidwirksam an den Eingangsanschluss 206 angeschlossen. An dem Eingangsanschluss 206 ist erwärmte Flüssigkeit bereitgestellt, welche dann über den ersten Zweig 310 der Wärmeübertragungseinrichtung 314 zuführbar ist.

Der zweite Zweig 312 mündet vor der Steckkopplung 238 in die Filtereinrichtung 236. Es ist dabei zwischen dem ersten Zweig 310 und dem zweiten Zweig 312 eine Aufteilungseinrichtung 315 und Vermischungseinrichtung 316 angeordnet. Durch die Aufteilungseinrichtung wird der am Eingangsanschluss 206 abgegriffene Strom an erwärmter Flüssigkeit in einen ersten Teilstrom und einen zweiten Teilstrom aufgeteilt. Der erste Teilstrom wird im ersten Zweig 310 in den Kreislauf 308 eingekoppelt. Der zweite Teilstrom wird der Vermischungseinrichtung 316 zugeführt. Der durch den Kreislauf 308 durchgelaufene Flüssigkeitsstrom wird im zweiten Zweig 312 ebenfalls in die Vermischungseinrichtung 316 eingekoppelt. Diese Mischung wird über den Filter 236 dem Zwei-Wege-Ventil 232 bereitgestellt.

Nur ein Teilstrom des Gesamtstroms an erwärmter Flüssigkeit, welche durch den Eingangsanschluss 206 bereitgestellt wird, durchströmt den Kreislauf 308 und die Mischung ist gegenüber der Flüssigkeit am Eingangsanschluss 206 abgekühlt.

In dem Kreislauf 308 ist ein Schaltventil 318 angeordnet, welches der Wärmeübertragungseinrichtung 314 vorgeschaltet ist. Das Schaltventil 318 ist beispielsweise durch ein Regelventil mit einstellbarer Schaltschwelle realisiert. Dieses Schaltventil 318 ist temperaturgesteuert mit einem zugeordneten Temperatursensor 320, welcher die Temperatur der Flüssigkeit im ersten Zweig 310 misst. In Abhängigkeit einer Temperaturschaltschwelle ist das Schaltventil 318 auf Durchlass oder auf Sperrung geschaltet; die Temperaturschwelle hängt dabei von der Desorptionstemperatur von Wasserstoff in der Wasserstoffsorptionsspeichereinrichtung 306 ab. Wenn die Temperatur der Flüssigkeit in dem ersten Zweig 310 zu niedrig ist, dann ist das Schaltventil 318 auf Sperrung geschaltet, um keine durch die Flüssigkeitskühlungsvorrichtung bedingte Abkühlung der Wasserstoffsorptionsspeichereinrichtung 306 zu bewirken. (Dies könnte die Wasserstoffdesorption erschweren.)

Erwärmte Flüssigkeit, welche über die Eingangsanschluss 206 eingekoppelt wird, wird in einem Teilstrom in den ersten Zweig 310 eingekoppelt. Wenn diese Flüssigkeit eine Temperatur oberhalb der genannten Temperaturschwelle hat, dann ist das Schaltventil 318 auf Durchströmung geschaltet. Diese erwärmte Flüssigkeit durchströmt die Wärmeübertragungseinrichtung 314 und diese steht in thermischem Kontakt mit der Wasserstoffsorptionsspeichereinrichtung 306.

Es ist dabei möglich, dass die Wärmeübertragungseinrichtung 314 in die Wasserstoffsorptionsspeichereinrichtung 306 integriert ist und beispielsweise innerhalb eines entsprechenden Speicherbehälters angeordnet ist.

Die Wasserstoffsorptionsspeichereinrichtung 306 wird durch die erwärmte Flüssigkeit erwärmt, um für eine Desorption von Wasserstoff zu sorgen.

Die dadurch abgekühlte Flüssigkeit wird über den zweiten Zweig 312 in die Vermischungseinrichtung 316 eingekoppelt und dort mit einem anderen Teilstrom der über den Eingangsanschluss 206 eingekoppelten Flüssigkeit vermischt und über den Filter 236 dem Zwei-Wege-Ventil 232 zugeführt.

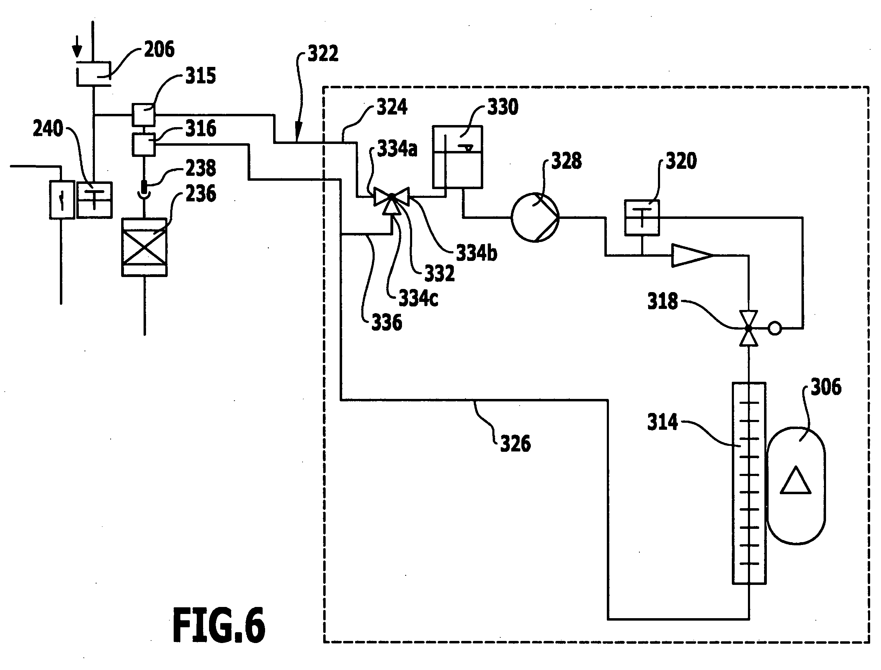

Bei einem weiteren Ausführungsbeispiel, welches schematisch in Figur 6 gezeigt ist, ist ein Kreislauf 322 mit einem ersten Zweig 324 und einem zweiten Zweig 326 vorgesehen. Es werden dabei für gleiche Elemente wie in der Ausführungsform gemäß Figur 5 gleiche Bezugszeichen verwendet. Zwischen dem ersten Zweig 324 und dem zweiten Zweig 326 ist wiederum die Wärmeübertragungseinrichtung 314 angeordnet. Der erste Zweig 324 geht aus von einer Aufteilungseinrichtung 315 und der zweite Zweig 326 mündet in die Vermischungseinrichtung 316.

In dem ersten Zweig 324 ist eine Pumpe 328 angeordnet. Insbesondere ist diese Pumpe mit durch das Brennstoffzellensystem bereitgestellter elektrischer Energie angetrieben.

Der Pumpe nachgeschaltet ist ein Schaltventil entsprechend dem Schaltventil 318 mit zugeordnetem Temperatursensor 320.

Der Pumpe 328 vorgeschaltet ist ein Flüssigkeitsbehälter 330, welcher ein Flüssigkeitsreservoir durch die Pumpe 328 bereitstellt. Dadurch lässt sich vermeiden, dass an der Pumpe 328 Kavitation auftritt.

In dem ersten Zweig ist dem Flüssigkeitsbehälter 330 vorgeschaltet eine Flusseinstellungseinrichtung 332 angeordnet. Durch diese lässt sich der Flüssigkeitsfluss zur Durchströmung des zweiten Kreislaufs 322 einstellen.

Bei einem Ausführungsbeispiel umfasst die Flusseinstellungseinrichtung 332 einen Eingang 334a, einen ersten Ausgang 334b, welcher in fluidwirksamer Verbindung mit dem Flüssigkeitsbehälter 330 steht, und einen zweiten Ausgang 334c.

Der Eingang 334a steht in direkter fluidwirksamer Verbindung mit einem Ausgang der Aufteilungseinrichtung 315. Von dem zweiten Ausgang 334c mündet eine Leitung 336 in den zweiten Zweig 326. Es lässt sich dadurch ein erster Teilstrom auf die Pumpe 328 und ein zweiter Teilstrom einstellen, welcher direkt in den zweiten Zweig 326 eingekoppelt wird. Das Verhältnis dieser Teilströme bestimmt den Massenstrom, welcher die Wärmeübertragungseinrichtung 314 durchströmt.

Ansonsten funktioniert die Flüssigkeitskühlungsvorrichtung wie oben beschrieben.

## Patentansprüche

1. Flüssigkeitskühlungsvorrichtung für eine Brennstoffzelleneinrichtung (12), welche als selbständige Einheit ausgebildet ist und durch welche der Brennstoffzelleneinrichtung (12) Kühlflüssigkeit bereitstellbar ist und von der Brennstoffzelleneinrichtung (12) erwärmte Flüssigkeit abnehmbar ist, umfassend einen Eingangsanschluss (206) für Flüssigkeit, einen Ausgangsanschluss (212) für Flüssigkeit, einen Radiator (220)und ein temperaturgeregeltes Zwei-Wege-Ventil (232), wobei ein erster Weg (248) durch den Radiator (220) geführt ist und ein zweiter Weg (254) an dem Radiator (220) vorbeigeführt ist und über das Zwei-Wege-Ventil (232) eine Massenstromaufteilung der Flüssigkeit auf den ersten Weg (248) und den zweiten Weg (254) einstellbar ist, und wobei dem Zwei-Wege-Ventil (232) mindestens ein Temperatursensor (264; 288) zugeordnet ist, wobei das Zwei-Wege-Ventil (232) auf Grundlage von Temperaturmesswerten des mindestens einen Temperatursensors (264; 288) geregelt ist, **dadurch gekennzeichnet, dass** eine Mehrzahl von Lüftern (222, 222'), welche individuell drehzahlgeregelt sind und welche auf den Radiator (220) ausgerichtet sind, vorgesehen ist, dass eine Schalteinrichtung (260), durch welche ein oder mehrere Lüfter (222, 222') zuschaltbar oder abschaltbar sind, vorgesehen ist, dass ein Lüfter (222') bei der Zuschaltung mit einer endlichen Mindestdrehzahl (294) betrieben ist, dass das Zwei-Wege-Ventil (232) einen Fühler aufweist, an welchem der mindestens eine Temperatursensor (264; 288) angeordnet ist, und dass der mindestens eine Temperatursensor (264) einem Flüssigkeitsvorrat (268) zur Pufferspeicherung von gekühlter Flüssigkeit zugeordnet ist, wobei der mindestens eine Temperatursensor (264) so angeordnet ist, dass eine Eingangstemperatur in den Flüssigkeitsvorrat (268) messbar ist oder der mindestens eine Temperatursensor so angeordnet ist, dass eine Temperatur im Flüssigkeitsvorrat messbar ist, oder dass der mindestens eine Temperatursensor (288) so angeordnet ist, dass eine Ausgangstemperatur nachfolgend einer Pumpe (272) messbar ist.

2. Flüssigkeitskühlungsvorrichtung nach Anspruch 1, **dadurch gekennzeichnet, dass** das Zwei-Wege-Ventil (232) als Drei-Zwei-Wege-Ventil ausgebildet ist.

3. Flüssigkeitskühlungsvorrichtung nach einem der vorangehenden Ansprüche, **dadurch gekennzeichnet, dass** das Zwei-Wege-Ventil (232) als Thermostatventil und/oder als Thermohydraulikventil ausgebildet ist.

4. Flüssigkeitskühlungsvorrichtung nach einem der vorangehenden Ansprüche, **gekennzeichnet durch** einen internen Flüssigkeitsvorrat (268).

5. Flüssigkeitskühlungsvorrichtung nach einem der vorangehenden Ansprüche, **gekennzeichnet durch** eine Filtereinrichtung (236), welche dem Eingangsanschluss (206) nachgeordnet ist.

6. Flüssigkeitskühlungsvorrichtung nach einem der vorangehenden Ansprüche, **dadurch gekennzeichnet, dass** dem mindestens einen Lüfter (222; 222') ein eigener Temperatursensor (228; 228') zugeordnet ist und/oder dass dem mindestens einen Lüfter (222; 222') ein eigener Drehzahlregler (224; 224') zugeordnet ist.

7. Flüssigkeitskühlungsvorrichtung nach einem der vorangehenden Ansprüche, **gekennzeichnet durch** einen Temperatursensor (256), welcher die Temperatur der Flüssigkeit im ersten Weg (248) vor Eintritt in den Radiator (20) misst, wobei aufgrund der gemessenen Temperaturwerte ein Lüfter (222') zuschaltbar oder abschaltbar ist.

8. Flüssigkeitskühlungsvorrichtung nach einem der vorangehenden Ansprüche, **gekennzeichnet durch** einen Betriebsmodus unterhalb einer ersten Schwellentemperatur (T₁) für die zu kühlende Flüssigkeit, bei dem die Flüssigkeit **durch** das Zwei-Wege-Ventil (232) in den zweiten Weg (254) geleitet wird, und insbesondere **dadurch** gekennzeichnet, dass in diesem Betriebsmodus mindestens ein Lüfter (222) mit endlicher Mindestdrehzahl (294) betrieben ist, und insbesondere **gekennzeichnet durch** eine Öffnung des Zwei-Wege-Ventils (232) mit temperaturgeregelter Aufteilung des Massenstroms an Flüssigkeit auf den ersten Weg (248) und den zweiten Weg (254) bei Überschreiten der ersten Schwellentemperatur, und insbesondere **gekennzeichnet durch** eine Drehzahlregelung des mindestens einen Lüfter (222) bei Überschreiten der ersten Schwellentemperatur (T₁), und insbesondere **gekennzeichnet durch** Zuschaltung mindestens eines weiteren Lüfters (222') bei Überschreiten einer zweiten Schwellentemperatur (T₂), welche oberhalb der ersten Schwellentemperatur (T₁) liegt, und insbesondere **gekennzeichnet durch** die Zuschaltung des mindestens einen Lüfters (222') mit einer endlichen Mindestdrehzahl (294).

9. Flüssigkeitskühlungsvorrichtung nach einem der vorangehenden Ansprüche, **dadurch gekennzeichnet, dass** beim Betrieb mindestens ein Lüfter (222) mindestens mit einer Mindestdrehzahl (294) betrieben ist.

10. Flüssigkeitskühlungsvorrichtung nach einem der vorangehenden Ansprüche, **gekennzeichnet durch** eine Alarmeinrichtung (244) zur Betriebsüberwachung, und insbesondere **dadurch** gekennzeichnet, dass die Alarmeinrichtung (244) eine Mehrzahl von hintereinander geschalteten Grenzwertschaltern (242, 277, 280) umfasst, und insbesondere **dadurch** gekennzeichnet, dass die Alarmeinrichtung (244) einen Temperaturwächter (240) für eine Eingangstemperatur der Flüssigkeit und/oder einen Füllstandswächter (278) an einem Flüssigkeitsvorrat (268) und/oder einen Minimaldurchflusswächter (276) für Flüssigkeit umfasst.

11. Flüssigkeitskühlungsvorrichtung nach einem der vorangehenden Ansprüche, **gekennzeichnet durch** einen Kreislauf (308; 322), in welchem einer Wasserstoffsorptionsspeichereinrichtung (306) erwärmte Flüssigkeit zur Desorption von Wasserstoff bereitstellbar ist, und insbesondere **dadurch gekennzeichnet, dass** in dem Kreislauf (308; 322) eine Wärmeübertragungseinrichtung (314) angeordnet ist, welche in thermischem Kontakt mit der Wasserstoffsorptionsspeichereinrichtung (306) steht, und insbesondere **dadurch gekennzeichnet, dass** der Kreislauf (308; 322) dem Eingangsanschluss (206) für Flüssigkeit nachgeschaltet ist, und insbesondere **dadurch gekennzeichnet, dass** in dem Kreislauf (308; 322) ein Schaltventil (318) für die Durchströmung einer Wärmeübertragungseinrichtung (314) mit Flüssigkeit angeordnet ist, welches temperaturgesteuert ist, und insbesondere **gekennzeichnet durch** eine Vermischungseinrichtung (316), **durch** welche ein Strom an erwärmter Flüssigkeit, welcher vom Eingangsanschluss (206) bereitgestellt ist, und ein Strom von der Wasserstoffsorptionsspeichereinrichtung (306) her mischbar und die Mischung dem Zwei-Wege-Ventil (232) bereitstellbar ist, und insbesondere **gekennzeichnet durch** eine Aufteilungseinrichtung (315), **durch** welche ein Flüssigkeitsstrom, welcher vom Eingangsanschluss (206) bereitgestellt ist, in einen Teilstrom für den Kreislauf (308; 322) und einen weiteren Teilstrom aufteilbar ist, und insbesondere **dadurch gekennzeichnet, dass** in dem Kreislauf (322) eine Pumpe (328) angeordnet ist, und insbesondere **dadurch gekennzeichnet, dass** der Pumpe (328) ein Flüssigkeitsbehälter (330) vorgeschaltet ist, und insbesondere **dadurch gekennzeichnet, dass** in dem Kreislauf (322) eine Flusseinstellungseinrichtung (332) angeordnet ist.

12. Brennstoffzellensystem, welches eine Brennstoffzelleneinrichtung (12) und eine Flüssigkeitskühlungsvorrichtung gemäß einem der vorangehenden Ansprüche umfasst, wobei die Flüssigkeitskühlungsvorrichtung mit einem Eingangsanschluss (115a) und dem Ausgangsanschluss (115b) an die Brennstoffzelleneinrichtung (12) gekoppelt ist.

## Claims

1. Liquid cooling apparatus for a fuel cell device (12), which is configured as an independent unit and by means of which the fuel cell device (12) can be provided with cooling liquid and heated liquid can be removed from the fuel cell device (12), comprising an inlet connection (206) for liquid, an outlet connection (212) for liquid, a radiator (220) and a temperature-controlled two-way valve (232), wherein a first path (248) passes through the radiator (220) and a second path (254) by-passes the radiator (220) and a mass flow distribution of the liquid into the first path (248) and the second path (254) can be adjusted by the two-way valve (232) and wherein at least one temperature sensor (264; 288) is associated with the two-way valve (232), wherein the two-way valve (232) is controlled on the basis of measured temperature values of the at least one temperature sensor (264; 288), **characterised in that** there is provided a plurality of fans (222, 222'), which are individually speed-controlled and which are directed at the radiator (220), **in that** there is provided a switching device (260), by means of which one or more fans (222; 222') can be switched on or off, **in that**, upon switching on, a fan (222) is operated at a finite minimum rotational speed (294), **in that** the two-way valve (232) has a detecting arrangement, at which the at least one temperature sensor (264; 288) is arranged, and **in that** the at least one temperature sensor (264) is associated with a liquid reservoir (268) for the bufferstoring of cooled liquid, wherein the at least one temperature sensor (264) is arranged in such a way that an inlet temperature into the liquid reservoir (268) can be measured or the at least one temperature sensor is arranged in such a way that a temperature in the liquid reservoir can be measured, or **in that** the at least one temperature sensor (288) is arranged in such a way that an outlet temperature following a pump (272) can be measured.

2. Liquid cooling apparatus according to claim 1, **characterised in that** the two-way valve (232) is configured as a three/two-way valve.

3. Liquid cooling apparatus according to any one of the preceding claims, **characterised in that** the two-way valve (232) is configured as a thermostat valve and/or as a thermo-hydraulic valve.

4. Liquid cooling apparatus according to any one of the preceding claims, **characterised by** an internal liquid reservoir (268)

5. Liquid cooling apparatus according to any one of the preceding claims, **characterised by** a filter device (236) which is arranged downstream of the inlet connection (206).

6. Liquid cooling apparatus according to any one of the preceding claims, **characterised in that** associated with the at least one fan (222; 222') is its own temperature sensor (228; 228') and/or **in that** associated with the at least one fan (222; 222') is its own speed controller (224; 224').

7. Liquid cooling apparatus according to any one of the preceding claims, **characterised by** a temperature sensor (256), which measures the temperature of the liquid in the first path (248) before entering the radiator (20), wherein a fan (222') can be switched on or off on the basis of the measured temperature values.

8. Liquid cooling apparatus according to any one of the preceding claims, **characterised by** an operating mode below a first threshold temperature (T₁) for the liquid to be cooled, in which the liquid is guided by the two-way valve (232) into the second path (254), and in particular **characterised in that**, in this operating mode, at least one fan (222) is operated at a finite minimum rotational speed, and in particular **characterised by** an opening of the two-way valve (232) with temperature-controlled distribution of the mass flow of liquid into the first path (248) and the second path (254) when the first threshold temperature is exceeded, and in particular **characterised by** a speed control of the at least one fan (222) when the first threshold temperature (T₁) is exceeded, and in particular **characterised by** the switching on of at least one further fan (222') when a second threshold temperature (T₂) is exceeded, which is above the first threshold temperature (T₁), and in particular **characterised by** the switching on of the at least one fan (222') at a finite minimum rotational speed (294).

9. Liquid cooling apparatus according to any one of the preceding claims, **characterised in that**, during operation, at least one fan (222) is operated at least at a minimum rotational speed (294).

10. Liquid cooling apparatus according to any one of the preceding claims, **characterised by** an alarm device (244) for monitoring operation, and in particular **characterised in that** the alarm device (244) comprises a plurality of limit monitors (242, 277, 280) connected one behind the other, and in particular **characterised in that** the alarm device (244) comprises a temperature monitor (240) for an inlet temperature of the liquid and/or a filling level monitor (278) at a liquid reservoir (268) and/or a minimal through-flow monitor (276) for liquid.

11. Liquid cooling apparatus according to any one of the preceding claims, **characterised by** a circuit (308; 322), in which heated liquid is provided to a hydrogen sorbtion storage device (306) for the desorbtion of hydrogen, and in particular **characterised in that** a heat transfer device (314), which is in thermal contact with the hydrogen sorbtion storage device (306), is arranged in the circuit (308; 322), and in particular **characterised in that** the circuit (308; 322) is connected downstream of the inlet connection (206) for liquid, and in particular **in that** a switching valve (318) for liquid to flow through a heat transfer device (314) is arranged in the circuit (308; 322) and is temperature-controlled, and in particular **characterised by** a mixing device (316), by which a flow of heated liquid, which is provided by the inlet connection (206), and a flow from the hydrogen sorbtion storage device (306) can be mixed and the mixture can be provided to the two-way valve (232), and in particular, **characterised by** a distribution device (315), by which a liquid flow, which is provided by the inlet connection (206), can be divided into a partial flow for the circuit (308; 322) and a further partial flow, and in particular, **characterised in that** a pump (328) is arranged in the circuit (322), and in particular **characterised in that** a liquid container (330) is connected upstream of the pump (328), and in particular **characterised in that** a flow adjustment device (332) is arranged in the circuit (322).

12. Fuel cell system, which comprises a fuel cell device (12) and a liquid cooling apparatus according to any one of the preceding claims, wherein the liquid cooling apparatus is coupled by an inlet connection (115a) and the outlet connection (115b) to the fuel cell device (12).

## Revendications

1. Dispositif de refroidissement à liquide pour une batterie de piles à combustible (12), qui est configuré comme une unité autonome et par lequel un liquide de refroidissement peut être fourni à la batterie de piles à combustible (12) et un liquide échauffé peut être prélevé de la batterie de piles à combustible (12), comprenant un raccord d'entrée (206) pour du liquide, un raccord de sortie (212) pour du liquide, un radiateur (220) et une soupape à deux voies (232) régulée en température, dans lequel une première voie (248) est conduite à travers le radiateur (220) et une deuxième voie (254) contourne le radiateur (220) et une distribution du flux massique du liquide sur la première voie (248) et la deuxième voie (254) peut être réglée au moyen de la soupape à deux voies (232), et dans lequel au moins un capteur de température (264; 288) est associé à la soupape à deux voies, dans lequel la soupape à deux voies (232) est régulée sur la base de valeurs de mesure de la température dudit au moins un capteur de température (264; 288), **caractérisé en ce qu'**il est prévu une multiplicité de ventilateurs (222, 222'), qui peuvent être régulés individuellement en vitesse de rotation et qui sont orientés vers le radiateur (220), **en ce qu'**il est prévu un dispositif de commutation (260), par lequel un ou plusieurs ventilateur(s) (222, 222') peut/peuvent être connecté(s) ou déconnecté(s), **en ce qu'**un ventilateur (222') fonctionne avec une vitesse de rotation minimale finie (294) lors de la connexion, **en ce que** la soupape à deux voies (232) présente un détecteur, sur lequel ledit au moins un capteur de température (264; 288) est disposé, et **en ce que** ledit au moins un capteur de température (264) est associé à une réserve de liquide (268) pour l'accumulation d'un tampon de liquide refroidi, dans lequel ledit au moins un capteur de température (264) est disposé de telle manière qu'une température d'entrée dans la réserve de liquide (268) puisse être mesurée ou ledit au moins un capteur de température est disposé de telle manière qu'une température dans la réserve de liquide puisse être mesurée, ou ledit au moins un capteur de température (288) est disposé de telle manière qu'une température de sortie en aval d'une pompe (272) puisse être mesurée.

2. Dispositif de refroidissement à liquide selon la revendication 1, **caractérisé en ce que** la soupape à deux voies (232) est configurée comme une soupape à trois-deux voies.

3. Dispositif de refroidissement à liquide selon l'une quelconque des revendications précédentes, **caractérisé en ce que** la soupape à deux voies (232) est configurée comme une soupape thermostatique et/ou comme une soupape thermo-hydraulique.

4. Dispositif de refroidissement à liquide selon l'une quelconque des revendications précédentes, **caractérisé par** une réserve de liquide interne (268).

5. Dispositif de refroidissement à liquide selon l'une quelconque des revendications précédentes, **caractérisé par** un dispositif de filtre (236), qui est agencé en aval du raccord d'entrée (206).

6. Dispositif de refroidissement à liquide selon l'une quelconque des revendications précédentes, **caractérisé en ce qu'**un capteur de température particulier (228; 228') est associé audit au moins un ventilateur (222; 222') et/ou un régulateur de vitesse de rotation particulier (224; 224') est associé audit au moins un ventilateur (222; 222').

7. Dispositif de refroidissement à liquide selon l'une quelconque des revendications précédentes, **caractérisé par** un capteur de température (256), qui mesure la température du liquide dans la première voie (248) avant l'entrée dans le radiateur (220), dans lequel un ventilateur (222') peut être connecté ou déconnecté sur la base des valeurs de température mesurées.

8. Dispositif de refroidissement à liquide selon l'une quelconque des revendications précédentes, **caractérisé par** un mode de fonctionnement en dessous d'une première température de seuil (T₁) pour le liquide à refroidir, dans lequel le liquide est conduit dans la deuxième voie (254) par la soupape à deux voies (232), et en particulier **caractérisé en ce que**, dans ce mode de fonctionnement, au moins un ventilateur (222) fonctionne avec une vitesse de rotation minimale finie (294), et en particulier **caractérisé par** une ouverture de la soupape à deux voies (232) avec une distribution régulée en température du flux massique de liquide sur la première voie (248) et la deuxième voie (254) en cas de dépassement de la première température de seuil, et en particulier **caractérisé par** une régulation en vitesse de rotation dudit au moins un ventilateur (222) en cas de dépassement de la première température de seuil (T₁), et en particulier **caractérisé par** la connexion d'au moins un autre ventilateur (222') en cas de dépassement d'une deuxième température de seuil (T₂), qui est située au-dessus de la première température de seuil (T₁), et en particulier **caractérisé par** la connexion dudit au moins un ventilateur (222') avec une vitesse de rotation minimale finie (294).

9. Dispositif de refroidissement à liquide selon l'une quelconque des revendications précédentes, **caractérisé en ce qu'**en cours de fonctionnement, au moins un ventilateur (222) fonctionne au moins avec une vitesse de rotation minimum (294).

10. Dispositif de refroidissement à liquide selon l'une quelconque des revendications précédentes, **caractérisé par** un dispositif d'alarme (244) pour la surveillance du fonctionnement, et en particulier **caractérisé en ce que** le dispositif d'alarme (244) comprend une pluralité d'interrupteurs de valeurs limites (242, 277, 280), et en particulier **caractérisé en ce que** le dispositif d'alarme (244) comprend un contrôleur de température (240) pour une température d'entrée du liquide et/ou un contrôleur de niveau (278) à une réserve de liquide (268) et/ou un contrôleur de débit minimal (276) pour le liquide.

11. Dispositif de refroidissement à liquide selon l'une quelconque des revendications précédentes, **caractérisé par** un circuit (308; 322), dans lequel un liquide échauffé peut être fourni à un dispositif d'accumulateur à sorption d'hydrogène (306) pour la désorption d'hydrogène, et en particulier **caractérisé en ce qu'**un dispositif de transfert de chaleur (314) est disposé dans le circuit (308; 322) et est en contact thermique avec le dispositif d'accumulateur à sorption d'hydrogène (306), et en particulier **caractérisé en ce que** le circuit (308; 322) est monté en aval du raccord d'entrée (206) pour un liquide, et en particulier **caractérisé en ce qu'**une soupape de commande (318) pour la traversée d'un dispositif de transfert de chaleur (314) avec un liquide est disposée dans le circuit (308; 322) et est commandée par la température, et en particulier **caractérisé par** un dispositif de mélange (316), par lequel un courant de liquide échauffé, qui est fourni par le raccord d'entrée (206), et un courant provenant du dispositif d'accumulateur à sorption d'hydrogène (306) peuvent être mélangés et le mélange peut être fourni à la soupape à deux voies (232), et en particulier **caractérisé par** un dispositif de distribution (315), par lequel un courant de liquide, qui est fourni par le raccord d'entrée (206), peut être distribué en un courant partiel pour le circuit (308; 322) et un autre courant partiel, et en particulier **caractérisé en ce qu'**une pompe (328) est disposée dans le circuit (322), et en particulier **caractérisé en ce qu'**un réservoir de liquide (330) est agencé en amont de la pompe (328), et en particulier **caractérisé en ce qu'**un dispositif de réglage de flux (332) est disposé dans le circuit (322).

12. Système de piles à combustible, qui comprend une batterie de piles à combustible (12) et un dispositif de refroidissement à liquide selon l'une quelconque des revendications précédentes, dans lequel le dispositif de refroidissement à liquide est couplé à la batterie de piles à combustible (12) avec un raccord d'entrée (115a) et le raccord de sortie (115b).
